# EUROPÄISCHE PATENTSCHRIFT

(11) **EP 2 310 455 B1**
(45) Veröffentlichungstag und Bekanntmachung des Hinweises auf die Patenterteilung: **05.07.2017**
(21) Anmeldenummer: 09781446.1
(22) Anmeldetag: 03.08.2009
(51) Int. Cl.: C08L 75/04

(54) **WERKSTOFF-KUNSTSTOFF-VERBUNDE UND VERFAHREN ZU IHRER HERSTELLUNG**
MATERIAL-PLASTIC COMPOSITE AND METHOD FOR THE MANUFACTURE THEREOF
COMPOSITES MATIÈRE PREMIÈRE/MATIÈRE PLASTIQUE ET PROCÉDÉS DE FABRICATION DE CEUX-CI

(30) Priorität: 04.08.2008 DE 102008040967
(43) Veröffentlichungstag der Anmeldung: 20.04.2011
(73) Patentinhaber: Leibniz-Institut für Polymerforschung Dresden e.V., 01069 Dresden (DE)
(72) Erfinder: LEHMANN, Dieter, 01640 Coswig (DE); HUPFER, Bernd, 01307 Dresden (DE); GEDAN-SMOLKA, Michaela, 01990 Großkmehlen (DE); BRÄUER, Matthias, 01237 Dresden (DE); NAGEL, Jürgen, 01277 Dresden (DE); EDELMANN, Mattias, 04769 Sornzig (DE)
(74) Vertreter: Rauschenbach, Marion
(86) Internationale Anmeldenummer: PCT/EP2009/060060
(87) Internationale Veröffentlichungsnummer: WO 2010/015612

(56) Entgegenhaltungen:
- EP-A1- 0 204 348
- WO-A1-2005/105880
- WO-A2-02/072285
- WO-A2-2005/061203
- DE-B1- 2 633 764
- GB-A- 2 165 772

## Beschreibung

Die Erfindung bezieht sich auf die Gebiete der Materialwissenschaften und der Chemie und betrifft Werkstoff-Kunststoff-Verbunde, wie sie beispielsweise als Verbunde aus lackierten Basismaterialien, wie Blechen, Metallformteilen, Automotivteilen, Behältern, Holzteilen, Kunststoffteilen (aus Thermoplast und Duromer wie z. B. aus Phenolharzen, Epoxidharzen, GMT oder SMC), in Funktionsteilen angewandt werden können und ein Verfahren zu ihrer Herstellung.

Es sind verschiedene Lösungen zur Herstellung von Werkstoff-Kunststoff-Verbunden und hier speziell von Metall-Kunststoff-Verbunden bekannt. Jedoch sind die Prozesse Schweißen oder Löten analog zu den Metallverbunden zur Herstellung von Metall-Kunststoff-Verbunden nicht anwendbar, da kein gemeinsames Prozessfenster existiert. Dementsprechend werden Verbindungselemente zur Herstellung von Metall-KunststoffVerbindungen eingesetzt.

Die Kombination von Blech- oder Metallformteilen und Kunststoffteilen wird ferner vielfach über die Klebtechnik - durch Einsatz spezieller Haftvermittler/Kleber unter Nutzung von Adhäsionskräften (Kleben) erreicht. Als spezielle Klebstoffe werden lösemittelhaltige Klebstoffsysteme, Dispersionen, Hotmelts und Reaktivkleber, vorzugsweise thermisch aktivierbare Kleber (DE 41 09 397 A1), eingesetzt.
Als vorteilhaft hat sich in einigen Fällen die Oberflächenmodifizierung oder Oberflächenaktivierung der Kunststoffteile durch Plasmabehandlung und durch Beflammen zur Verbesserung der Verbundhaftung erwiesen.
Die Haftung wird auch schon ohne Kleber durch Reinigung und Vorbehandlung der Fügeflächen mit Atmosphärenplasma erhöht (G. Krüger et al., Adhäsion - Kleben & Dichten, 42 (1998)). Dabei können niedrige Verbundfestigkeiten durch eine Vergrößerung der Fügeflächen kompensiert werden.

Eine spezielle Form des Verbundspritzgießens wird von Giese (V. M. Giese, Dissertation 1995, Universität Erlangen-Nürnberg, Lehrstuhl für Polymerwerkstoffe) beschrieben, indem der Kunststoff mit Verträglichkeitsvermittlern/Haftvermittlern modifiziert wird.
Zur Realisierung von Verbunden kann auch über Kleben Nadelvlies als Haftvermittler zwischen Stahl und Polypropylen oder Polyethylen eingesetzt werden (M. Weiß-Quasdorf et al., Taschenbuch für die Textilindustrie 2000).

Eine weitere bekannte Variante ist das Verbund-Spritzgießen zur Herstellung von Hybridbauteilen durch eine mechanische Verklammerung. Hierzu werden neben Adhäsionskräften vorrangig mechanische Verzahnungen/Hinterschneidungen zur Verbundbildung genutzt. Diese Verfahren werden in zahlreichen Varianten und Variationen eingesetzt, um eine entsprechend stabile Metall-Kunststoff-Verbindung herzustellen (EP 0 721 090 A1; EP 0721 831 A1; DE 100 29 411 A1; DE 101 49 522 A1; DE 103 17 218 A1; DE 103 29 710 A1). Dabei können Einlegeteile von Kunststoff stoffschlüssig umspritzt werden (23. IKV-Kolloquium Aachen 2006, S. 11 ff.).

Nach EP 01 699 612 A1 ist ein Kunststoff-Metall-Verbundrohr bekannt, nach dem der Verbund durch formschlüssige Verbindung (Hinterschneidungen im Metallkörper) des Kunststoffes zum Metall realisiert wird; aufwändige Metallbearbeitungsverfahren sind notwendig. Bei inneren Hohlräumen und/oder Durchbrüchen wird die mechanische Verklammerung analog dem Nieten oder sonstiger bekannter Fügeverfahren aus der Metallverbundtechnik genutzt.

Aus EP 01 086 166 A1 ist ein Verfahren zur Herstellung einer Verbindung zwischen einem Kunststoffmaterial und einer Metalloberfläche bekannt, bei dem auf die Metalloberfläche ein Pulver aus einer adhäsiven Polymerzusammensetzung aufgebracht, die Metalloberfläche durch Spritzgießen mit einem Kunststoffmaterial umspritzt und der Metalloberfläche Wärme zugeführt wird.

Nach der WO 00/59990 ist ein ähnliches Verfahren zur Herstellung eines Metall-Kunststoff-Verbundes bekannt, in dem im ersten Schritt auf die Metalloberfläche ein Polymerklebstoffpulver aufgebracht und im zweiten Schritt durch Überspritzen (Overmoulding) der Metalloberfläche der Verbund hergestellt und schließlich eine Temperaturbehandlung über die Metalloberfläche durchgeführt wird.

Aus der US 6,403,673 C1 ist eine photoreaktive Beschichtung (Kleber) aus der DISPECOLL-Serie (Bayer MaterialScience AG) bekannt, die mit olefinisch ungesättigten Doppelbindungen als thermoaktivierbarer Kleber zum Verkleben von Aluminiumteilen mit Kunststoff eingesetzt wird. Die Klebschicht wird aus wässriger Lösung auf das Aluminiumteil aufgebracht, verfilmt und getrocknet - die Schicht ist lagerstabil. Beim späteren Spritzgießen oder bei der Extrusion wird durch die heiße Kunststoffschmelze des Hybridpartners mit der (Kleb-)Schicht eine radikalische Vernetzungsreaktion aktiviert, die zu einer verbesserten Verbundhaftung führt.

Bei diesen flächigen Verklebungen treten jedoch Probleme mit der Schwindung der Kunststoffkomponente beim Abkühlen auf. Unterschiedliche Wärmeausdehnungskoeffizienten beim Einsatz von thermischen Fügeverfahren führen immer wieder zu Material-Spannungsproblemen, die die anfängliche Verbundfestigkeit der Verbindung deutlich herabsetzen oder die sich bis zum vollständigen Verbund-Versagen äußern können.

Eine spezielle Variante des Hinterspritzens von Metallteilen mit der Zielstellung, Oberflächeneffekte an Kunststoffteilen in Form von Echtmetalloberflächen zu erzielen, wurde vom Kunststoff-Institut Lüdenscheid entwickelt (K-Zeitung 5 - 9. März 2006, Fügetechnik). Die Wirkung unterschiedlicher Haftvermittler steht dabei im Vordergrund. Nach vorheriger Beschichtung des Formteils mit einem speziell auf die Kunststoffkomponente abgestimmten Haftvermittler/Primer wird der Kunststoff aufgespritzt - es werden gute bis sehr gute Haftungen auch noch nach der Klimawechselprüfung beschrieben. Eine dekorative Wirkung wird vordergründig von der jeweiligen Metalloberfläche erzielt. Als problematisch wird bei flächigen Teilen hingegen aufgrund der unterschiedlichen Wärmeausdehnungskoeffizienten der Verzug durch die höhere Schwindung der Kunststoffkomponente angesehen. Besitzt das Metallteil eine entsprechende Steifigkeit, so dass der Spannungsausgleich nicht durch Verformung kompensiert werden kann, kann es zur teilweisen oder vollständigen Delamination kommen.

In der WO2005/061203 wird ein Metall-Kunststoff-Verbund beschrieben, in dem zwischen der Kunststoffschicht und dem metallischen Bereich eine aus einem thermischen dem metallischen Bereich und der Kunststoffschicht eine kraftschlüssige Verbindung vorliegt. Die Haftvermittlerschicht ist mit einer derartigen Elastizität ausgeführt, dass unterschiedliche Wärmeausdehnungskoeffizienten des metallischen Bereichs und der Kunststoffschicht über die Haftvermittlerschicht weitgehend ausgleichbar sind.

In der DE 10 2005 032 421 A1 werden ebenfalls Kunststoff-Metall-Verbundkörper und ein Verfahren zur Herstellung durch Metallhinterspritzung, in dem das Metallteil mit Haftvermittlern modifiziert ist, beschrieben. Das Metall-Blechteil ist aus Aluminium und/oder einer Aluminiumlegierung gebildet. Dessen Innenseite ist mit dem Kunststoff-Trägerteil verbunden. Das Kunststoffteil besteht aus einem wärmebeständigen Kunststoff und es besteht eine alterungsbeständige stoffschlüssige Verbindung zwischen dem Metall-Blechteil und dem Kunststoff. Die Verbundbildung wird durch Aktivierung eines wärme- und chemikalienbeständigen Haftvermittlers, der vor dem Hinterspritzen auf das Metallteil aufgebracht wurde, bewirkt.

De2633764, GB2165772 und EP0204348 offenbaren Verbundwerkstoffe aus Metall oder Glas und Kunststoff mit einer haftvermittelnden Lackschicht.

Aufgrund der wachsenden Bedeutung der Verbundwerkstoffe sowie von Verbundelementen in der Technik werden unterschiedliche Verfahren zu deren Herstellung eingesetzt.

Die Zielstellung bei der Herstellung von Verbundwerkstoffen oder Verbundelementen ist die kostengünstige Kombination von unterschiedlichen Werkstoffeigenschaften in einem Bauelement. Die spezifischen Eigenschaften des jeweiligen (Funktions-)Werkstoffes können somit optimal genutzt werden. Diese Nutzung ist dabei wesentlich abhängig von der Qualität des Verbundes. Die unterschiedlichen Werkstoffeigenschaften auch hinsichtlich der Wärmeausdehnungskoeffizienten ergeben bei der Kombination der Werkstoffe oftmals nur ungenügende Verbundfestigkeiten. Der Einsatz aufwändiger Füge- und Klebeprozesse ist die Folge.

Aufgabe der vorliegenden Erfindung ist es, Werkstoff-Kunststoff-Verbunde anzugeben, die einen direkten Verbund über adhäsive und vor allem kovalente Bindungen stoffschlüssig zwischen einer Werkstoffkomponente und einer Kunststoffkomponente realisiert, die bisher nur über mechanische Verankerungen, nachträgliche Verklebungen oder über Haftvermittler, die vor dem Spritzgießprozess auf die Werkstoffteile appliziert wurden, möglich waren und ein einfaches und kostengünstiges Verfahren zu ihrer Herstellung.

Die Erfindung wird durch die in den Ansprüchen angegebene Erfindung gelöst. Vorteilhafte Ausgestaltungen sind Gegenstand der Unteransprüche.

Die erfindungsgemäßen Werkstoff-Kunststoff-Verbunde bestehen aus mindestens einer Werkstoffkomponente und mindestens einer elastischen Kunststoffkomponente, wobei zwischen ihnen mindestens teilweise ein (teil-)vernetzter Lack angeordnet ist,
- wobei die (re-)aktiven freien Isocyanatgruppen und/oder Epoxygruppen und/oder die unter thermischer Rückspaltung deblockierten Isocyanatgruppen und/oder die (thermisch und/oder katalytisch) aktivierbaren Uretdiongruppen und/oder Allophanatgruppen und/oder Biuretgruppen des (teil-)vernetzten Lackes mit den funktionellen Gruppen der elastischen Kunststoffkomponente reagiert haben und eine kovalente Bindung über Urethangruppen und/oder Allophanatgruppen und/oder Harnstoffgruppen und/oder Biuretgruppen und/oder Estergruppen und/oder Ethergruppen und/oder Amidgruppen und/oder Amingruppen zwischen dem (teil-)vernetztem Lack und der elastischen Kunststoffkomponente ausgebildet ist,
   oder
- wobei die reaktiven funktionellen Hydroxygruppen und/oder Carbonsäuregruppen und/oder Epoxygruppen des (teil-)vernetzten Lackes mit freien Isocyanatgruppen und/oder unter thermischer Rückspaltung deblockierten Isocyanatgruppen und/oder (thermisch und/oder katalytisch) aktivierten Uretdiongruppen und/oder Allophanatgruppen und/oder Biuretgruppen und/oder Epoxygruppen der elastischen Kunststoffkomponente reagiert haben und eine kovalente Bindung über Urethangruppen und/oder Allophanatgruppen und/oder Estergruppen und/oder Ethergruppen und/oder Amidgruppen zwischen dem (teil-)vernetztem Lack und der elastischen Kunststoffkomponente ausgebildet ist,
   wobei die kovalenten Bindungen durch Additionsreaktionen der freien Isocyanatgruppen und/oder der unter thermischer Rückspaltung deblockierten Isocyanatgruppen und/oder unter thermischer und/oder katalytischer Aktivierung der Uretdiongruppen und/oder Allophanatgruppen und/oder Biuretgruppen und/oder Epoxygruppen und deren Reaktion mit funktionellen Gruppen und unter Ausschluss von unspezifischen Radikalreaktionen entstanden sind,
   und, wobei der Lack nach der Aufbringung während der gesamten weiteren Bearbeitung zu Werkstoff-Kunststoff-Verbunden nicht wieder aufgeschmolzen worden ist,
   und die elastische Kunststoffkomponente mindestens teilweise auf die Lackschicht durch ein thermisches Auftragungsverfahren aufgebracht ist, ohne eine thermische Nachbehandlung nach der Verbundbildung.

Die weiterhin erfindungsgemäßen Werkstoff-Kunststoff-Verbunde bestehen aus mindestens einer Werkstoffkomponente, mindestens einer elastischen und mindestens einer thermoplastischen, harten Kunststoffkomponente, wobei die Werkstoffkomponente mit mindestens einem (teil-)vernetzten Lack beschichtet ist, - wobei die (re-)aktiven freien Isocyanatgruppen und/oder Epoxygruppen und/oder die unter thermischer Rückspaltung deblockierten Isocyanatgruppen und/oder die (thermisch und/oder katalytisch) aktivierbaren Uretdiongruppen und/oder Allophanatgruppen und/oder Biuretgruppen des (teil-)vernetzten Lackes mit den funktionellen Gruppen der elastischen Kunststoffkomponente reagiert haben und eine kovalente Bindung über Urethangruppen und/oder Allophanatgruppen und/oder Harnstoffgruppen und/oder Biuretgruppen und/oder Estergruppen und/oder Ethergruppen und/oder Amidgruppen und/oder Amingruppen zwischen dem (teil-)vernetztem Lack und der elastischen Kunststoffkomponente ausgebildet ist,
oder
- wobei die reaktiven funktionellen Hydroxygruppen und/oder Carbonsäuregruppen und/oder Epoxygruppen des (teil-)vernetzten Lackes mit freien Isocyanatgruppen und/oder unter thermischer Rückspaltung deblockierten Isocyanatgruppen und/oder (thermisch und/oder katalytisch) aktivierten Uretdiongruppen und/oder Allophanatgruppen und/oder Biuretgruppen und/oder Epoxygruppen der elastischen Kunststoffkomponente reagiert haben und eine kovalente Bindung über Urethangruppen und/oder Allophanatgruppen und/oder Estergruppen und/oder Ethergruppen und/oder Amidgruppen zwischen dem (teil-)vernetztem Lack und der elastischen Kunststoffkomponente ausgebildet ist,
   und wobei die elastische Kunststoffkomponente die Verbindung zwischen der Lackschicht und der thermoplastischen, harten Kunststoffkomponente bildet,
   und wobei die kovalenten Bindungen durch Additionsreaktionen der freien Isocyanatgruppen und/oder der unter thermischer Rückspaltung deblockierten Isocyanatgruppen und/oder unter thermischer und/oder katalytischer Aktivierung der Uretdiongruppen und/oder Allophanatgruppen und/oder Biuretgruppen und/oder Epoxygruppen und deren Reaktion mit funktionellen Gruppen und unter Ausschluss von unspezifischen Radikalreaktionen entstanden sind,
   und wobei der Lack nach der Aufbringung während der gesamten weiteren Bearbeitung zu Werkstoff-Kunststoff-Verbunden nicht wieder aufgeschmolzen worden ist, und die elastische Kunststoffkomponente mindestens teilweise auf die Lackschicht durch ein thermisches Auftragungsverfahren und die thermoplastische, harte Kunststoffkomponente mindestens teilweise auf der elastischen Kunststoffkomponente durch ein thermisches Auftragungsverfahren aufgebracht ist oder die elastische und die thermoplastische, harte Kunststoffkomponenten im Sandwich-(Spritzgieß-)Verfahren mindestens teilweise auf die Lackschicht aufgebracht sind, wobei die elastische Komponente im Sandwichverfahren die Hautkomponente bildet, ohne eine thermische Nachbehandlung nach der Verbundbildung.

Und die ebenfalls erfindungsgemäßen Werkstoff-Kunststoff-Verbunde bestehen aus mindestens einer Werkstoffkomponente, mindestens einer elastischen und einer duromeren Kunststoffkomponente, wobei die Werkstoffkomponente mit mindestens einem (teil-)vernetzten Lack beschichtet ist,
- wobei die (re-)aktiven freien Isocyanatgruppen und/oder Epoxygruppen und/oder die unter thermischer Rückspaltung deblockierten Isocyanatgruppen und/oder die (thermisch und/oder katalytisch) aktivierbaren Uretdiongruppen und/oder Allophanatgruppen und/oder Biuretgruppen des (teil-)vernetzten Lackes mit den funktionellen Gruppen der elastischen Kunststoffkomponente reagiert haben und eine kovalente Bindung über Urethangruppen und/oder Allophanatgruppen und/oder Harnstoffgruppen und/oder Biuretgruppen und/oder Estergruppen und/oder Ethergruppen und/oder Amidgruppen und/oder Amingruppen zwischen dem (teil-)vernetztem Lack und der elastischen Kunststoffkomponente ausgebildet ist,
   oder
- wobei die reaktiven funktionellen Hydroxygruppen und/oder Carbonsäuregruppen und/oder Epoxygruppen des (teil-)vernetzten Lackes mit freien Isocyanatgruppen und/oder unter thermischer Rückspaltung deblockierten Isocyanatgruppen und/oder (thermisch und/oder katalytisch) aktivierten Uretdiongruppen und/oder Allophanatgruppen und/oder Biuretgruppen und/oder Epoxygruppen der elastischen Kunststoffkomponente reagiert haben und eine kovalente Bindung über Urethangruppen und/oder Allophanatgruppen und/oder Estergruppen und/oder Ethergruppen und/oder Amidgruppen zwischen dem (teil-)vernetztem Lack und der elastischen Kunststoffkomponente ausgebildet ist,
   und wobei die elastische Kunststoffkomponente die Verbindung zwischen der Lackschicht und der duromeren Kunststoffkomponente bildet,
   und wobei die kovalenten Bindungen durch Additionsreaktionen der freien Isocyanatgruppen und/oder der unter thermischer Rückspaltung deblockierten Isocyanatgruppen und/oder unter thermischer und/oder katalytischer Aktivierung der Uretdiongruppen und/oder Allophanatgruppen und/oder Biuretgruppen und/oder Epoxygruppen und deren Reaktion mit funktionellen Gruppen und unter Ausschluss von unspezifischen Radikalreaktionen entstanden sind,
   und wobei der Lack nach der Aufbringung während der gesamten weiteren Bearbeitung zu Werkstoff-Kunststoff-Verbunden nicht wieder aufgeschmolzen worden ist, und die elastische Kunststoffkomponente mindestens teilweise auf die Lackschicht durch ein thermisches Auftragungsverfahren und die duromere Kunststoffkomponente mindestens teilweise auf der elastischen Kunststoffkomponente durch ein thermisches Auftragungsverfahren der Duromerverarbeitung aufgebracht ist, ohne eine thermische Nachbehandlung nach der Verbundbildung.

Vorteilhafterweise besteht die Werkstoffkomponente aus Metall und dessen Modifikationen, Holz und dessen Modifikationen, Kunststoff und dessen Modifikationen, Keramik und dessen Modifikationen oder deren Werkstoffkombinationen.

Ebenfalls vorteilhafterweise besteht die elastische Kunststoffkomponente aus thermoplastisch verarbeitbaren Elastomeren/thermoplastischen Elastomeren (TPE), insbesondere aus Polyurethan, das funktionelle Gruppen zur Ausbildung von kovalenten Bindungen mit (re-)aktiven und/oder (thermisch und/oder katalytisch) aktivierbaren Gruppen der Lackschicht besitzt oder das (re-)aktive und/oder (thermisch und/oder katalytisch) aktivierbare Gruppen zur Ausbildung von kovalenten Bindungen mit funktionellen Gruppen der Lackschicht besitzt.

Weiterhin vorteilhafterweise ist die elastische Kunststoffkomponente durch Extrusion, (Mehrkomponenten-)Spritzgießen Spritzpressen oder Sandwich-(spritzgieß-)Verfahren oder Schäumen (Dolphin-Verfahren) aufgebracht.

Und auch vorteilhafterweise ist die elastische Kunststoffkomponente durch Mehrkomponentenspritzgießen oder im Sandwich-(spritzgieß-)verfahren aufgebracht.

Bei dem erfindungsgemäßen Verfahren zur Herstellung von Werkstoff-Kunststoff-Verbunden wird mindestens eine Werkstoffkomponente eine Schicht aus einem Lack aufgebracht, verfilmt und (teil-)vernetzt,
- wobei der (teil-)vernetzte Lack (re-)aktive freie Isocyanatgruppen und/oder Epoxygruppen und/oder unter thermischer Rückspaltung deblockierbare Isocyanatgruppen und/oder (thermisch und/oder katalytisch) aktivierbare Uretdiongruppen und/oder Allophanatgruppen und/oder Biuretgruppen aufweist, und nachfolgend mindestens eine elastische Kunststoffkomponente mittels eines thermischen Auftragungsverfahrens im schmelzflüssigen Zustand mindestens teilweise auf die (teil-)vernetzte Lackschicht aufgebracht wird, wobei die Kunststoffkomponente funktionelle Gruppen aufweist, die fähig sind, im schmelzflüssigen Zustand mit den (re-)aktiven und/oder (thermisch und/oder katalytisch) aktivierbaren Gruppen des (teil-)vernetzten Lackes eine kovalente Bindung in Form von Urethangruppen und/oder Allophanatgruppen und/oder Harnstoffgruppen und/oder Biuretgruppen und/oder Estergruppen und/oder Ethergruppen und/oder Amidgruppen und/oder Amingruppen einzugehen,
   oder
- wobei der (teil-)vernetzte Lack funktionelle Gruppen in Form von Epoxygruppen und/oder Hydroxygruppen und/oder Carbonsäuregruppen aufweist, und nachfolgend mindestens eine elastische Kunststoffkomponente mittels eines thermischen Auftragungsverfahrens im schmelzflüssigen Zustand mindestens teilweise auf die Lackschicht aufgebracht wird, wobei die Kunststoffkomponente freie und/oder thermisch deblockierbare Isocyanatgruppen und/oder Uretdiongruppen und/oder Allophanatgruppen und/oder Biuretgruppen und/oder Epoxygruppen aufweist, die fähig sind, im schmelzflüssigen Zustand mit den funktionellen Gruppen des (teil-)vernetzten Lackes eine kovalente Bindung einzugehen,
   und wobei der Lack nach der Aufbringung der elastischen Kunststoffkomponente und während der gesamten weiteren Verarbeitung zu Werkstoff-Kunststoff-Verbunden nicht aufgeschmolzen und der Verbund nicht thermisch nachbehandelt wird.

Weiterhin wird bei dem erfindungsgemäßen Verfahren zur Herstellung von Werkstoff-Kunststoff-Verbunden mindestens eine Werkstoffkomponente eine Schicht aus einem Lack aufgebracht, verfilmt und (teil-)vernetzt,
- wobei der (teil-)vernetzte Lack (re-)aktive freie Isocyanatgruppen und/oder Epoxygruppen und/oder unter thermischer Rückspaltung deblockierbare Isocyanatgruppen und/oder (thermisch und/oder katalytisch) aktivierbare Uretdiongruppen und/oder Allophanatgruppen und/oder Biuretgruppen aufweist, und nachfolgend mindestens eine elastische Kunststoffkomponente mittels eines thermischen Auftragungsverfahrens im schmelzflüssigen Zustand mindestens teilweise auf die (teil-)vernetzte Lackschicht aufgebracht wird, wobei die Kunststoffkomponente funktionelle Gruppen aufweist, die fähig sind, im schmelzflüssigen Zustand mit den (re-)aktiven und/oder (thermisch und/oder katalytisch) aktivierbaren Gruppen des (teil-)vernetzten Lackes eine kovalente Bindung in Form von Urethangruppen und/oder Allophanatgruppen und/oder Harnstoffgruppen und/oder Biuretgruppen und/oder Estergruppen und/oder Ethergruppen und/oder Amidgruppen und/oder Amingruppen einzugehen,
   oder
- wobei der (teil-)vernetzte Lack funktionelle Gruppen in Form von Epoxygruppen und/oder Hydroxygruppen und/oder Carbonsäuregruppen aufweist, und nachfolgend mindestens eine elastische Kunststoffkomponente mittels eines thermischen Auftragungsverfahrens im schmelzflüssigen Zustand mindestens teilweise auf die Lackschicht aufgebracht wird, wobei die Kunststoffkomponente freie und/oder thermisch deblockierbare Isocyanatgruppen und/oder Uretdiongruppen und/oder Allophanatgruppen und/oder Biuretgruppen und/oder Epoxygruppen aufweist, die fähig sind, im schmelzflüssigen Zustand mit den funktionellen Gruppen des (teil-)vernetzten Lackes eine kovalente Bindung einzugehen,
   und mindestens eine thermoplastische harte Kunststoffkomponente mittels eines thermischen Auftragungsverfahrens mindestens teilweise auf die elastomere Kunststoffkomponente im Mehrkomponentenverfahren aufgebracht wird, und wobei der Lack nach der Aufbringung der elastischen Kunststoffkomponente und während der gesamten weiteren Verarbeitung zu Werkstoff-Kunststoff-Verbunden nicht aufgeschmolzen und der Verbund nicht thermisch nachbehandelt wird.

Und ebenfalls wird bei dem erfindungsgemäßen Verfahren zur Herstellung von Werkstoff-Kunststoff-Verbunden mindestens eine Werkstoffkomponente eine Schicht aus einem Lack aufgebracht, verfilmt und (teil-)vernetzt, - wobei der (teil-)vernetzte Lack (re-)aktive freie Isocyanatgruppen und/oder Epoxygruppen und/oder unter thermischer Rückspaltung deblockierbare Isocyanatgruppen und/oder (thermisch und/oder katalytisch) aktivierbare Uretdiongruppen und/oder Allophanatgruppen und/oder Biuretgruppen aufweist, und nachfolgend mindestens eine elastische Kunststoffkomponente mittels eines thermischen Auftragungsverfahrens im schmelzflüssigen Zustand mindestens teilweise auf die (teil-)vernetzte Lackschicht aufgebracht wird, wobei die Kunststoffkomponente funktionelle Gruppen aufweist, die fähig sind, im schmelzflüssigen Zustand mit den (re-)aktiven und/oder (thermisch und/oder katalytisch) aktivierbaren Gruppen des (teil-)vernetzten Lackes eine kovalente Bindung in Form von Urethangruppen und/oder Allophanatgruppen und/oder Harnstoffgruppen und/oder Biuretgruppen und/oder Estergruppen und/oder Ethergruppen und/oder Amidgruppen und/oder Amingruppen einzugehen,
oder
- wobei der (teil-)vernetzte Lack funktionelle Gruppen in Form von Epoxygruppen und/oder Hydroxygruppen und/oder Carbonsäuregruppen aufweist, und nachfolgend mindestens eine elastische Kunststoffkomponente mittels eines thermischen Auftragungsverfahrens im schmelzflüssigen Zustand mindestens teilweise auf die Lackschicht aufgebracht wird, wobei die Kunststoffkomponente freie und/oder thermisch deblockierbare Isocyanatgruppen und/oder Uretdiongruppen und/oder Allophanatgruppen und/oder Biuretgruppen Epoxygruppen aufweist, die fähig sind, im schmelzflüssigen Zustand mit den funktionellen Gruppen des (teil-)vernetzten Lackes eine kovalente Bindung einzugehen,
   und mindestens eine duromere Kunststoffkomponente mittels eines thermischen Auftragungsverfahrens mindestens teilweise auf die elastomere Kunststoffkomponente aufgebracht wird,
   und wobei der Lack nach der Aufbringung während der gesamten weiteren Verarbeitung zu Werkstoff-Kunststoff-Verbunden nicht aufgeschmolzen und der Verbund nicht thermisch nachbehandelt wird.

Vorteilhafterweise werden als Werkstoffkomponenten Metall und dessen Modifikationen, Holz und dessen Modifikationen, Kunststoff und dessen Modifikationen, Keramik und dessen Modifikationen oder deren Werkstoffkombinationen eingesetzt.

Ebenfalls vorteilhafterweise werden als elastische Kunststoffkomponente thermoplastisch verarbeitbare Elastomere/thermoplastische Elastomere (TPE), insbesondere Polyurethan, das (re-)aktive und/oder (thermisch und/oder katalytisch) aktivierbare Gruppen zur Ausbildung von kovalenten Bindungen mit funktionellen Gruppen der Lackschicht besitzt oder das funktionelle Gruppen zur Ausbildung von kovalenten Bindungen mit (re-)aktiven und/oder (thermisch und/oder katalytisch) aktivierbaren Gruppen der Lackschicht besitzt, eingesetzt.

Weiterhin vorteilhafterweise wird die elastische Kunststoffkomponente durch Extrusion, (Mehrkomponenten-)Spritzgießen, Spritzpressen oder Sandwich-(spritzgieß-)Verfahren oder Schäumen (Dolphin-Verfahren) aufgebracht.

Auch vorteilhafterweise wird die elastische Kunststoffkomponente als Zwischenschicht mit einer Dicke von 0,1 bis 10 mm und vorzugsweise von 0,5 bis 2 mm oder als Funktionsschicht aufgebracht.

Von Vorteil ist es auch, wenn die elastische Kunststoffkomponente als Zwischenschicht oder als Funktionsschicht modifiziert und/oder gefüllt und/oder verstärkt aufgebracht wird.

Ebenfalls von Vorteil ist es, wenn die thermoplastische harte Kunststoffkomponente modifiziert und/oder gefüllt und/oder verstärkt aufgebracht wird.

Weiterhin von Vorteil ist es, wenn die duromere Kunststoffkomponente modifiziert und/oder gefüllt und/oder verstärkt aufgebracht wird.

Und auch von Vorteil ist es, wenn die Lackschicht aus einer Lösung oder Dispersion oder als Pulver oder als Schmelze oder als flüssiges100%-System aufgebracht wird.

Mit der erfindungsgemäßen Lösung wird es erstmals möglich, neben den in jedem Falle vorliegenden adhäsiven Bindungskräften zwischen einer Werkstoffkomponente und einer elastischen Kunststoffkomponente zusätzlich noch kovalente Bindungen zu realisieren, die eine deutliche Verbesserung der Verbundfestigkeit zur Folgen haben.

Die erfindungsgemäße Oberflächenbeschichtung der Werkstoffe mit dem Lack kann in einem zeitlich und örtlich vorausgegangenen Arbeitsgang mit einem (teil-)vernetzbaren Lack erfolgen. Dabei kann die Lackschicht aus einer Lösung oder Dispersion oder als Pulver oder als Schmelze oder als bei Raumtemperatur flüssiges (100%-)System (lösungsmittelfreier, reaktiver Lack) aufgebracht werden. In jedem Fall muss der Lack entweder über reaktive und/oder (thermisch und/oder katalytisch) aktivierbare Gruppen verfügen, die erst während der Aufbringung der elastischen Kunststoffkomponente im schmelzflüssigen Zustand reaktiv sind und/oder (thermisch und/oder katalytisch) aktiviert werden können, und die mit funktionellen Gruppen der elastischen Kunststoffkomponente eine kovalente Bindung eingehen, oder der Lack muss über funktionelle Gruppen verfügen, die mit reaktiven und/oder (thermisch und/oder katalytisch) aktivierbaren Gruppen der elastischen Kunststoffkomponente, die erst während der Aufbringung der elastischen Kunststoffkomponente im schmelzflüssigen Zustand reaktiv sind und/oder aktiviert werden können, eine kovalente Bindung eingehen. Neben einer thermischen Aktivierung, die vorteilhafterweise über eine Temperaturerhöhung erfolgt, kann die Aktivierung beispielsweise auch durch spezielle, bekannte Katalysatoren durchgeführt werden. Diese(r) Katalysator(en) ist/sind in der Komponente als Additiv vorhanden, die nicht mit den aktivierbaren Gruppen ausgerüstet ist. Diese katalytische Aktivierung kann separat oder in Kombination mit der thermischen Aktivierung erfolgen.

Beispielsweise ist es vorteilhaft, wenn der Lack über blockierte Isocyanatgruppen und/oder Uretdiongruppen und/oder Allophanatgruppen und/oder Biuretgruppen als thermisch aktivierbare Gruppen und/oder über Epoxygruppen als reaktive Gruppen verfügt und mit den funktionellen Gruppen eines thermoplastisch verarbeitbaren Polyurethans kovalente Bindungen ausbildet.
Es ist auch vorteilhaft, wenn der Lack über Epoxygruppen als reaktive Gruppen verfügt und mit den funktionellen Gruppen eines thermoplastisch verarbeitbaren Polyurethans kovalente Bindungen ausbildet.
Andererseits ist es auch vorteilhaft, wenn die Kunststoffkomponente und speziell die Polyurethankomponente über blockierte Isocyanatgruppen und/oder Uretdiongruppen und/oder Allophanatgruppen und/oder Biuretgruppen als thermisch aktivierbare Gruppen und/oder über freie Isocyanatgruppen und/oder Epoxygruppen als reaktive Gruppen verfügt und mit den funktionellen Gruppen an der Oberfläche der nicht aufschmelzenden Lackschicht kovalente Bindungen ausbildet.

Es ist auch möglich, dass sowohl die Lackschicht als auch die Kunststoffkomponente und hier speziell die Polyurethankomponente über blockierte Isocyanatgruppen und/oder Uretdiongruppen und/oder Allophanatgruppen und/oder Biuretgruppen als thermisch aktivierbare Gruppen und/oder über freie Isocyanatgruppen und/oder Epoxygruppen als reaktive Gruppen verfügen und mit den zusätzlich vorhandenen funktionellen Gruppen der jeweiligen Gegenfläche (Lack/Kunststoffkomponente) kovalente Bindungen ausbildet.

Der Fachmann besitzt hier eine seinem Wissen entsprechende Variationsbreite an reaktiven und/oder (thermisch und/oder katalytisch) aktivierbaren und entsprechenden funktionellen Gruppen für die Ausbildung kovalenter Bindungen und weiß bzw. kann in wenigen Versuchen die jeweilig optimalen Konzentrationen an Gruppen sowie die Reaktionsbedingungen auswählen. Aufgrund der Variationsbreite wird auf die detaillierte Aufzählung dieser bekannten Variationsmöglichkeiten der Isocyanat- und/oder Epoxyreaktionen verzichtet.

Die Reaktionen, die zu den kovalenten Bindungen im erfindungsgemäßen Verbund führen, sind keine unspezifischen Radikalreaktionen, sondern es sind definierte und an sich bekannte Additionsreaktionen unter thermischer Rückspaltung der blockierten Isocyanatgruppen und/oder thermischer und/oder katalytischer Aktivierung (Spaltung) einzelner Uretdion- und/oder Allophanatgruppen und/oder Biuretgruppen und deren Reaktion mit den funktionellen Gruppen der heißen elastischen Kunststoffkomponente. Besonders vorteilhaft dabei ist, dass die Lackschicht nach ihrer Herstellung nicht noch einmal aufgeschmolzen wird, da sonst die innere Festigkeit und gegebenenfalls die reaktiven und/oder (thermisch und/oder katalytisch) aktivierbaren oder die funktionellen Gruppen durch Reaktion teilweise oder vollständig verloren gehen können.
Es ist ebenso besonders vorteilhaft - vor allem beim Einsatz von Lacken mit Uretdion-und Allophanatgruppen - dass während der Verbundherstellung die Lackschicht nicht aufgeschmolzen wird, da auch hierbei die innere Festigkeit sinken und dadurch der Verbund geschwächt werden kann.
Die mit dem Lack beschichtete Werkstoffkomponente wird dann erfindungsgemäß in eine Vorrichtung gegeben, die ein thermisches Auftragen der elastischen Kunststoffkomponente mindestens auf Teilbereich(e) der Lackschicht ermöglicht. Als thermisches Auftragungsverfahren kommen Extrusion, (Mehrkomponenten-)Spritzgießen, Spritzpressen oder Sandwich-(spritzgieß-)Verfahren oder Schäumen (Dolphin-Verfahren) in Frage.
Im Falle des Spritzgießens wird die beschichtete Werkstoffkomponente in ein auf der Spritzgießmaschine befestigtes Spritzgießwerkzeug eingelegt und fixiert. Nach dem Schließen des Werkzeuges durch die Spritzgießmaschine erfolgt das Einspritzen oder Umschäumen mit der elastischen Kunststoffkomponente oder mehreren Kunststoffkomponenten in Form des Mehrkomponentenspritzgießens (2-Komponentenspritzgießen mit nacheinander eingespritzten Komponenten und/oder Sandwichspritzgießen) in die Werkzeugkavitäten. Die Werkzeugkavitäten bilden dabei die Konturen für die aufzubringende Kunststoffkomponente.

Die Verbundfestigkeit zwischen dem Lack und der kontaktierenden elastischen Kunststoffkomponente beruht zusätzlich zu den adhäsiven Wechselwirkungen dabei auf einer chemischen Reaktion zwischen diesen Komponenten unter Ausbildung von kovalenten Bindungen. Beim Mehrkomponentenspritzgießen können zusätzlich in bekannter Weise nach DE 198 10 312 auch chemische Reaktionen zur Erhöhung der Verbundfestigkeit beitragen. Im Fall, dass die Kunststoffkomponente aus mehreren Kunststoffen besteht, muss als Kontaktschicht zur Lackschicht eine elastische Kunststoffkomponente mit reaktiven und/oder reaktivierbaren und/oder (thermisch und/oder katalytisch) aktivierbaren Kopplungsgruppen oder funktionellen Gruppen aufgebracht werden.
Vorteilhafterweise ist eine solche elastische Kunststoffkomponente ein thermoplastisches Elastomer, welches unmodifiziert oder haftungsmodifiziert und/oder modifiziert mit Füll- und/oder Verstärkungsstoffen, vorzugsweise als thermoplastisch verarbeitbares Polyurethan (TPU), eingesetzt werden kann. Im Fall des Einsatzes einer solchen Kunststoffkomponente kann gleichzeitig eine Formschlüssigkeit mit der beschichteten Werkstoffkomponente erreicht werden. Ebenso wird die (Medien-)Dichtheit zwischen der beschichteten Werkstoffkomponente und der Kunststoffkomponente erreicht, was in Dichtungssystemen genutzt werden kann.

Ein weiterer Vorteil der erfindungsgemäßen Lösung ist, dass mit entsprechend gewählten Stoffkombinationen von Werkstoffkomponente und elastischer Kunststoffkomponente ein Spannungsausgleich zwischen den Komponenten erreicht werden kann, sofern diese unterschiedliche Ausdehnungskoeffizienten aufweisen, und/oder ein Ausgleich von Druck-, Zug- und Schwingungskräften unter Einsatzbedingungen und/oder eine verbesserte Haftung realisiert werden kann.

Die Herstellung des Verbundes erfolgt, indem eine flächige oder lokale, direkte Überspritzung der lackierten Werkstoffkomponente realisiert wird. Der Verbund entsteht somit direkt an der Grenzfläche zwischen der Lackschicht und der gewünschten elastischen Kunststoffkomponente, der durch adhäsive und kovalente Bindungen entstanden ist.

Soll der Verbund dagegen hauptsächlich zwischen einer lackierten Werkstoffkomponente und einer harten, thermoplastischen oder duromeren Kunststoffkomponente realisiert werden, so ist dies über eine Zwischenschicht aus einer elastischen Kunststoffkomponente ebenfalls möglich.
Bei dieser Verfahrensweise wird in der ersten Stufe eine Zwischenschicht aus einer elastischen Kunststoffkomponente durch beispielsweise Spritzgießen auf die Lackoberfläche aufgebracht, die neben adhäsiven Bindungskräften vor allem über kovalente Bindungen irreversibel mit der Lackschicht gekoppelt wird. In einem zweiten Arbeitsschritt wird dann die harte, thermoplastische oder duromere Kunststoffkomponente beispielsweise ebenfalls durch Spritzgießen auf die Zwischenschicht aus der elastischen Kunststoffkomponente aufgespritzt, die neben den adhäsiven Bindungskräften vorteilhaft auch kovalente Bindungen zur Erhöhung der Verbundhaftung ausbildet und so die elastische und die harte Kunststoffkomponente irreversibel miteinander verbunden sind. Derartige vorteilhafte Materialkombinationen zwischen der lackierten Werkstoffkomponente und der harten Kunststoffkomponente wie z.B. Polycarbonat oder Polyamid, gekoppelt über eine elastische Kunststoffkomponente als Zwischenschicht, können mit TPU-Materialien wie z.B. Elastollan 85 Shore A realisiert werden.

Beim Einsatz des Sandwichspritzgießens unter Einsatz einer Elastomerhautkomponente werden die einzelnen Komponenten in einem Verfahrensschritt eingespritzt.
Die Zwischenschicht aus der elastischen Kunststoffkomponente bildet dabei durch kovalente Bindungen eine gute Haftung zur Lackoberfläche aus. Vorteilhafterweise bildet die elastische Kunststoffkomponente neben adhäsiven Bindungskräften auch kovalente Bindungen zur harten, thermoplastischen oder duromeren Kunststoffkomponente aus, um einen stabilen Verbund zwischen "Werkstoff/Lack/elastischer Kunststoffkomponente/harter Kunststoffkomponente" zu realisieren.

Die elastischen Eigenschaften der Kunststoffkomponente, vorzugsweise TPU, kompensieren gleichzeitig die durch die Verarbeitungsschwindung auftretenden Zugspannungen, wie auch unter Einsatzbedingungen auftretende Schwingungs- und Spannungszustände.

Das Verfahren kann zur Herstellung von Verbunden als Bauteile oder auch als Komponenten für die Bereiche der Oberflächenveredlung zur dekorativen oder funktionellen Gestaltung der Bauteiloberflächen eingesetzt werden. Anwendungsbereiche können sein:
Automotivbereich und Haushaltbereich z.B.:
   + Aufspritzen von leitfähigen Kunststoffformteilen
   + Aufspritzen von dekorativen Oberflächenkomponenten
   + Aufspritzen von Bedienelementen
   + Aufspritzen von Dichtelementen
   + Aufspritzen von Lichtleitelementen
   + Aufspritzen von Halterungs- und/oder Funktionselementen (Gewindeaugen, Nocken, Ösen, Schnappverbindungselementen, Scharnieren etc.)
   + Aufspritzen von Dicht- und Federelementen
   + Aufspritzen von Versteifungselementen (Rippen, Rippenstrukturen)
   + Aufspritzen von Tribomaterial-Gleitelementen wie z.B. aus chemisch gekoppelten Polyamid-PTFE-Materialen.

Die erfindungsgemäß eingesetzte Werkstoffkomponente kann vorteilhafterweise Metall, Holz, duromere Holzwerkstoffe, Kunststoff, WPC (Wood Plastic Composite), SMC, Keramik oder eine Werkstoffkombination dieser Werkstoffe sein.
Als Werkstoffkomponente, die als lackierte Basismaterialien eingesetzt werden, können Bleche, Metallformteile, Automotivteile aus Metall und/oder Kunststoff, Behälter, Holz-(form-)teile als Massivholz, Spanverbund oder WPC (Wood Plastic Composite), Kunststoff-(form-)teile aus thermoplastischen und duromeren Materialien wie z. B. aus Phenolharzen, Epoxidharzen, GMT oder SMC zum Einsatz kommen.

Mindestens eine Oberfläche der Werkstoffkomponente wird vollständig oder nur teilweise/lokal mit einem (teil-)vernetzbaren Lack beschichtet, der mindestens entweder über reaktive und/oder aktivierbare Gruppen verfügt, die auch erst während der Aufbringung der elastischen Kunststoffkomponente im schmelzflüssigen Zustand reaktiv sind und/oder aktiv werden können, und die mit funktionellen Gruppen der elastischen Kunststoffkomponente eine kovalente Bindung eingehen, oder der Lack muss über funktionelle Gruppen verfügen, die mit reaktiven und/oder aktivierbaren Gruppen der elastischen Kunststoffkomponente, die während der Aufbringung der elastischen Kunststoffkomponente in der Schmelze reaktiv sind und/oder aktiv werden können, eine kovalente Bindung eingehen.
Die Lackschicht kann aus der Lösung oder Dispersion oder als Schmelze oder als Pulver oder als bei Raumtemperatur flüssiges (100%-)System (lösungsmittelfreier, reaktiver Lack) auf die Werkstoffkomponente über bekannte Verfahren aufgebracht werden, und wird dann verfilmt und ausgehärtet. Unter Aushärtung der Lackschicht wird im Rahmen der vorliegenden Erfindung verstanden, dass ein stabiler, (teil-)vernetzter, einsatzfähiger Lackfilm mit (re-)aktiven und/oder (thermisch und/oder katalytisch) (re-)aktivierbaren Gruppen (wie z.B. Isocyanat-, blockierte Isocyanat-, Uretdion-, Allophanat- und/oder Biuretgruppen und/oder Epoxygruppen) oder funktionellen Gruppen beispielsweise Hydroxy-, Carbonsäure- und/oder Epoxygruppen vorliegt, der umformstabil ist, und dessen (re-)aktive und/oder (re-)aktivierbare oder funktionellen Gruppen ohne ein Aufschmelzen der Lackschicht in der Grenzfläche während der Verbundherstellung kovalente Bindungen mit einer elastischen Kunststoffkomponente ausbilden, wenn diese mittels eines thermischen Verfahrens im schmelzflüssigen Zustand aufgebracht wird. Unter Ausnutzung der Schmelzewärme bei dem thermischen Aufbringen der elastischen Kunststoffkomponente werden neben der Ausbildung von adhäsiven Bindungskräften auch chemische Reaktionen initiiert, die zur Ausbildung der kovalenten Bindungen führen.
Das gleichzeitige Vorliegen von adhäsiven Kräften und zusätzlichen kovalenten Bindungen führt zu einer erhöhten, technisch nutzbaren Verbundfestigkeit.

Mit der erfindungsgemäßen Lösung wird eine neue Qualität der Verbundbildung erreicht. Bei der Verbundbildung bildet die Lackschicht einen form- und kraftschlüssigen langzeitstabilen Verbund einerseits mit der Werkstoffoberfläche und andererseits mit der elastischen Kunststoffkomponente über adhäsive und vor allem kovalente Bindungen.

Sofern der Verbund der Lackschicht mit der Werkstoffkomponente nicht über die ausreichende Elastizität für Umformprozesse verfügt, so kann die Lackierung auch nach dem Umformprozess erfolgen, oder so kann eine Stabilisierung auch durch Auswahl einer entsprechenden elastischen Kunststoffkomponente und/oder deren Schichtdicke erreicht werden.
Somit kann der erfindungsgemäße Verbund bei entsprechender Materialauswahl sowohl vor als auch nach seiner Verbundherstellung umgeformt werden.

Auch können so erfindungsgemäß stoffschlüssige Sandwich-Plattensysteme oder Mehrschichtsysteme mit einer elastomeren kompakten oder geschäumten Zwischenschicht oder mit einer elastomeren/thermoplastischen/elastomeren Zwischenschicht hergestellt werden.

Es kann beispielsweise:
(a) ein mit Lack beschichtetes Bau- oder Formteil als beschichtete Werkstoffkomponente, z. B. aus Metall oder Kunststoff, in das Werkzeug einer Spritzgießmaschine eingelegt werden und nach dem Schließen des Werkzeugs die elastische Kunststoffkomponente partiell/lokal und/oder flächig aufgespritzt oder umspritzt werden, oder
(b) ein beschichtetes Halbzeug als beschichtete Werkstoffkomponente, z. B. in Form eines lackierten Bleches, in das Werkzeug einer Spritzgießmaschine eingelegt werden, im Werkzeug der Spritzgießmaschine umgeformt werden und entweder die elastische Kunststoffkomponente direkt an das umgeformte Teil gespritzt oder in einem Drehteller-Werkzeug in einer anderen Werkzeug-Position die elastische Kunststoffkomponente mit einem Spritzgießaggregat partiell/lokal und/oder flächig auf das umgeformte Teil gespritzt werden.

Werden mehrere Kunststoffkomponenten gespritzt, so wird als erste Komponente eine dünne elastische Kunststoffkomponente als Zwischenschicht gespritzt und folgend die harte oder elastische zweite Kunststoffkomponente, die die Bauteileigenschaften realisiert. Die Kunststoffkomponenten können im Mehrkomponentenspritzgießen nacheinander oder in der Sonderform des Sandwichspritzgießens in einem Verfahrensschritt verarbeitet werden.

Verfahrensmäßig werden die beschichteten Werkstoffkomponenten manuell oder durch Roboter zur Verbundbildung in ein auf der Spritzgießmaschine befestigtes geöffnetes Spritzgießwerkzeug eingelegt und fixiert. Nach dem Schließen des Spritzgießwerkzeuges erfolgt das Einspritzen oder Umschäumen mit mindestens der elastischen Kunststoffkomponente und/oder mit mehreren Komponenten in die Werkzeugkavitäten. Die Werkzeugkavitäten bilden dabei die Konturen für die aufzubringenden Kunststoffelemente.

Vorteilhaft ist dabei auch, dass eine Überdeckung der beschichteten Werkstoffkomponente mit dem Lack und/oder der elastischen Kunststoffkomponente vollständig oder lokal/teilweise erfolgen kann.

Ebenso ist vorteilhaft, dass die Verfahren zum thermischen Aufbringen der elastischen Kunststoffkomponente auch kombiniert werden können, beispielsweise durch eine Kombination von Spritzgießen und Schäumen (Dolphin-Verfahren) erfolgen kann.

Die langzeitstabile Verbundbildung im erfindungsgemäßen Werkstoff-Kunststoff-Verbund beruht dabei neben den adhäsiven Bindungskräften auf zusätzlichen kovalenten Bindungen, die durch chemische Reaktionen während der Verbundherstellung und unter Ausnutzung der Schmelzewärme bei der Aufbringung der elastischen Kunststoffkomponente ausgelöst/initiiert werden.

Nachfolgende beispielhafte Kombinationen der erfindungsgemäßen Werkstoff-Kunststoff-Verbunde sind möglich und vorteilhaft:
- Werkstoff/Lack/TPU(→ als Funktionselement)
- Werkstoff/Lack/TPU(→ als Zwischenschicht)/TPU* (TPU*...zweite TPU-Komponente)
- Werkstoff/Lack/TPU(→ als Zwischenschicht)/Polyamid
- Werkstoff/Lack/TPU(→ als Zwischenschicht)/Polycarbonat
- Werkstoff/Lack/TPU(→ als Zwischenschicht)/Polyester

Dabei können TPU, Polyamid, Polycarbonat und Polyester sowohl unmodifiziert als auch chemisch mit reaktiven funktionellen Gruppen modifiziert und/oder mit bekannten Füll- und/oder Verstärkungsstoffen modifiziert zur Verbundbildung eingesetzt werden.

Sofern die elastische Kunststoffkomponente als Zwischenschicht realisiert wird, kann diese Dicken von 0,1 bis 10 mm, vorzugsweise zwischen 0,5 und 2 mm, aufweisen.
Die Modifizierung der Elastomer-Zwischenschichtkomponente wie z.B. TPU kann bekanntermaßen mit überschüssigen freien oder blockierten Isocyanat- und/oder Uretdion- und/oder Allophanat-Gruppen und/oder Biuretgruppen oder im Fall von z.B. PEBA-Elastomeren mit überschüssigen Hydroxygruppen und/oder Carbonsäuregruppen und/oder Epoxygruppen oder mit überschüssigen Hydroxy- und/oder Aminogruppen erfolgen, um eine optimale Verbundbildung/Kopplung mit entsprechenden, dem Fachmann bekannten reaktiven Gruppen unter Ausbildung von kovalenten Bindungen zur Lackschicht und gegebenenfalls zur weiteren Kunststoffkomponente zu erreichen.

Durch Lackierung behandelte und gegebenenfalls umgeformte Bauteile als lackbeschichtete Werkstoffkomponenten können somit, gegebenenfalls sogar ohne zusätzliche aufwändige Umform- und/oder Zerspanungsprozesse (für Hinterschneidungen oder mechanische Verankerungselemente) und insbesondere ohne Klebeprozesse, mit Funktions- und Dekorativelementen zu einem Verbund komplettiert werden, der haftfest ist und für den eine nachträgliche Lackierung vermieden werden kann. Eine nachträgliche Lackierung von Flächen, in der sehr aufwändig die aufgespritzten Kunststoffelemente abgedeckt werden müssen, ist nicht mehr erforderlich.

Die Erfindung wird nachfolgend an mehreren Ausführungsbeispielen näher erläutert.

### Vergleichsbeispiel 1 (Stand der Technik)

Als Werkstoffkomponente wurde eine Stahlplatte der Abmessung 120×50×2 (in mm) unbeschichtet eingesetzt. Die Platte wurde in ein Spritzgießwerkzeug, das auf einer Spritzgießmaschine mit 500 kN Schließkraft aufgespannt war, eingelegt und fixiert.
Nach dem Schließen des Spritzgießwerkzeuges durch die Spritzgießmaschine erfolgte das Einspritzen eines thermoplastisch verarbeitbaren Polyurethans (TPU, Elastollan 1185 A10) bei einer Schmelzetemperatur von 215°C.
Die überspritzte Fläche besaß die Abmessungen von 120×25 (in mm), Dicke: 2 mm. Die Prüfung der Verbundfestigkeit zwischen dem TPU und dem unbeschichteten Stahlbauteil erfolgte mit einem Rollenschältest in Anlehnung an DIN EN 2243T3. Die Schälkraft betrug 35 N.
Für technische Anwendungen ist diese Verbundfestigkeit nicht ausreichend.
Ohne eine Vorbehandlung der Stahloberfläche wird keine Verbundhaftung erreicht. Beim Entformen löst sich die aufgespritzte TPU-Schicht von der Stahloberfläche.

### Vergleichsbeispiel 2 (Stand der Technik)

Als Werkstoffkomponente wurde eine Aluminiumplatte der Abmessung 120×50×2 (in mm) unbeschichtet eingesetzt. Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines thermoplastisch verarbeitbaren Polyurethans (Elastollan 1185 A10) bei einer Schmelzetemperatur von 215 °C.

Die überspritzte Fläche besaß die Abmessungen von 120×25 (in mm), Dicke: 2 mm. Die Prüfung der Verbundfestigkeit zwischen dem TPU und dem unbeschichteten Aluminiumbauteil erfolgte mit einem Rollenschältest in Anlehnung an DIN EN 2243T3. Die Schälkraft betrug 85 N.

Für die meisten technischen Anwendungen ist diese Verbundfestigkeit nicht ausreichend.

Ohne eine Vorbehandlung der Aluminiumoberfläche wird keine Verbundhaftung erreicht. Beim Entformen löst sich die aufgespritzte TPU-Schicht von der Aluminiumoberfläche.

### Vergleichsbeispiel 3 (Stand der Technik)

Als Werkstoffkomponente wurde eine Stahlplatte der Abmessung 120×50×2 (in mm) mit Pulverlack (PUR-Pulverlack 1 mit der Zusammensetzung: 32 % amorphes OH-funktionalisiertes Polyesterharz, 8 % teilkristallines Polyesterharz, 25 % Uretdion-Härter, 2 % Epoxid und 0,5 % Katalysator sowie 30 % Weißpigment (TiO₂) und Additive (Verlaufsmittel, Entgasungsmittel), beschichtet und bei 200°C 15 Minuten ausgehärtet, so dass eine Beschichtung nur mit Urethangruppen und ohne Allophanatgruppen vorlag. Die Schichtdicke betrug 60 bis 75 µm.

Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines thermoplastisch verarbeitbaren Polyurethans (Elastollan 1185 A10) bei einer Schmelzetemperatur von 215 °C.

Die überspritzte Fläche besaß die Abmessungen von 120×25 (in mm), Dicke: 1,5 mm. Beim Entformen trennte sich die TPU-Komponente vom lackierten Stahlbauteil. Eine Prüfung der Verbundfestigkeit zwischen dem TPU und dem lackierten Stahlbauteil war nicht möglich.

### Beispiel 1

Als Werkstoffkomponente wurde eine Stahlplatte der Abmessung 120×50×2 (in mm) mit Pulverlack (PUR-Pulverlack 1 mit der Zusammensetzung: 32 % amorphes OH-funktionalisiertes Polyesterharz, 8 % teilkristallines Polyesterharz, 25 % Uretdion-Härter, 2 % Epoxid und 0,5 % Katalysator sowie 30 % Weißpigment (TiO₂) und Additive (Verlaufsmittel, Entgasungsmittel), (teil-)ausgehärtet als Allophanatlack) beschichtet. Die Schichtdicke betrug 60 bis 70 µm.

Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines thermoplastisch verarbeitbaren Polyurethans (Elastollan 1185 A10) bei einer Schmelzetemperatur von 215 °C.

Die überspritzte Fläche besaß die Abmessungen von 120×25 (in mm), Dicke: 1,5 mm. Die Prüfung der Verbundfestigkeit zwischen dem TPU und dem lackierten Stahlbauteil erfolgte mit einem Rollenschältest in Anlehnung an DIN EN 2243T3. Die Schälkraft betrug 245 N.

Für technische Anwendungen im Vergleich zur Verbundbildung im Vergleichsbeispiel 1 weist dieser Verbund eine gute Festigkeit auf.

### Beispiel 2

Als Werkstoffkomponente wurde eine Aluminium-Platte der Abmessung 120×50×2 (in mm) mit Pulverlack (PUR-Pulverlack 1 s. Beispiel 1) beschichtet. Die Schichtdicke betrug ca. 80 µm.

Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines thermoplastisch verarbeitbaren Polyurethans (Elastollan C 85 A10) bei einer Schmelzetemperatur von 215 °C.

Die überspritzte Fläche besaß die Abmessungen von 120x25 (in mm), Dicke: 2 mm. Die Prüfung der Verbundfestigkeit zwischen dem TPU und dem lackierten Aluminiumbauteil erfolgte mit einem Rollenschältest in Anlehnung an DIN EN 2243T3. Die Schälkraft betrug 186 N.

Für technische Anwendungen im Vergleich zur Verbundbildung im Vergleichsbeispiel 2 ist die Verbundfestigkeit als gut einzustufen.

### Beispiel 3

Als Werkstoffkomponente wurde eine Stahlplatte der Abmessung 120×50×2 (in mm) mit Pulverlack (PUR-Pulverlack 2 mit der Zusammensetzung: 39 % amorphes OH-funktionalisiertes Polyesterharz, 10 % teilkristallines Polyesterharz, 15 % Uretdion-Härter, 2 % Epoxid und 0,5 % Katalysator sowie 30 % Weißpigment (TiO₂) und Additive (Verlaufsmittel, Entgasungsmittel), (teil-)ausgehärtet als Allophanatlack) beschichtet. Die Schichtdicke betrug 70 bis 80 µm.

Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines thermoplastisch verarbeitbaren Polyurethans (Elastollan C85 A10, haftungsmodifiziert mit 5 Ma.-% MDI (Diphenylmethan-4,4'-diisocyanat)) bei einer Schmelzetemperatur von 215 °C als dünne Schicht von 0,8 mm. Die überspritzte Fläche besaß die Abmessungen von 120×25 (in mm). In einem zweiten Schritt wird die so lokal mit einer TPU-Schicht oberflächenmodifizierte Stahlplatte in einem zweiten Werkzeug mit einem PA6 Ultramid B3EG 6 in einem Overmolding-Prozess überspritzt.

Die Prüfung der Verbundfestigkeit zwischen dem PA und dem lackierten Stahlbauteil mit der TPU-Zwischenschicht erfolgte mit einem Schertestverfahren. Die Scherkraft betrug 320 N.

Für technische Anwendungen ist dies eine sehr gute Verbundfestigkeit.

### Beispiel 4

Als Werkstoffkomponente wurde eine Aluminiumplatte der Abmessung 120×50×2 (in mm) mit Pulverlack (PUR-Pulverlack 2 s. Beispiel 3) beschichtet. Die Schichtdicke betrug 60 bis 70 µm.

Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines thermoplastisch verarbeitbaren Polyurethans (Elastollan 1185 A10, haftungsmodifiziert mit 3 Ma.-% MDI (Diphenylmethan-4,4'-diisocyanat)) bei einer Schmelzetemperatur von 215 °C als dünne Schicht von 0,5 mm. Die überspritzte Fläche besaß die Abmessungen von 120×25 (in mm). In einem zweiten Schritt wird die so lokal mit einer TPU-Schicht oberflächenmodifizierte Aluminiumplatte in einem zweiten Werkzeug mit einem PC (Polycarbonat) Lexan 121 in einem Overmolding-Prozess überspritzt.

Die Prüfung der Verbundfestigkeit zwischen dem PC und dem lackierten Aluminiumbauteil mit der TPU-Zwischenschicht erfolgte mit einem Schertestverfahren. Die Scherkraft betrug 460 N. Für technische Anwendungen ist dies eine sehr gute Verbundfestigkeit.

### Beispiel 5

Als Werkstoffkomponente wurde eine Aluminium-Platte/Halbzeug der Abmessung 100x100x1 (in mm) mit Pulverlack (PUR-Pulverlack 1, s. Beispiel 1) beschichtet. Die Schichtdicke betrug ca. 80 µm.

Die Platte wurde in ein Spritzgießwerkzeug, in dem eine Tiefziehform für Umformprozesse (Demonstratorbauteil: Näpfchenform) integriert war, eingelegt. Das Werkzeug war in einer Spritzgießmaschine mit 500 kN Schließkraft aufgespannt und fixiert.

Mit dem Schließen des Spritzgießwerkzeuges durch die Spritzgießmaschine erfolgte der Umformprozess des beschichteten Aluminiumhalbzeugs zu einem Demonstratorbauteil (Näpfchenform). Anschließend wurde sofort im zweiten Schritt ein thermoplastisch verarbeitbares Polyurethan (Elastollan C60 D, haftungsmodifiziert mit 3 Ma.-% MDI (Diphenylmethan-4,4'-diisocyanat)) bei einer Schmelzetemperatur von 215 °C so eingespritzt, dass ein TPU-Formkörper mit Probekörperabmessungen (TPU-Verbundfläche auf dem Aluminiumformteil 4 x 10 (in mm)) lokal/senkrecht auf der umgeformten Demonstrator-/Näpfchenoberfläche ausgebildet wurde.

Die Verbundfestigkeit zwischen dem TPU und dem eingespannten lackierten Aluminiumbauteil wurde in Anlehnung an den Zugversuch DIN ISO 53455 bestimmt. Die Zugfestigkeit betrug 23,6 N/mm², was eine gute Verbundfestigkeit für technische Anwendungen ist.

### Beispiel 6 (Schäumen: Dolphin-Technologie / Skinform-Verfahren)

Als Basismaterial wurde eine Aluminium-Platte der Abmessung 120×50×2 (in mm) mit Pulverlack (PUR-Pulverlack 2, s. Beispiel 3) beschichtet. Die Schichtdicke betrug 70 bis 80 µm.

Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte dann in der Spritzgießmaschine im zweiten Schritt das Überfluten mit einem Polyurethan (Dolphin-Technologie, Fa. ENGEL bzw. Skinform-Verfahren, Fa. Krauss-Maffei). Durch die chemische Kompatibilität zwischen Lackschicht und dem Polyurethan sowie durch die Ausbildung zusätzlicher kovalenter Bindungen wird eine gute Haftung der beiden Materialien miteinander erzielt.

Die Prüfung der Verbundfestigkeit zwischen dem TPU und dem lackierten Aluminiumbauteil erfolgte wiederum mit einem Schältestverfahren. Die Schälkraft betrug 160 N und ist eine gute Verbundfestigkeit für viele technische Anwendungen.

### Beispiel 7

Als Basismaterial wurde eine MDF-Platte (mitteldichte Faserplatte) der Abmessung 120×50×4 (in mm) mit Pulverlack (PUR-Pulverlack 1, s. Beispiel 1) beschichtet. Die Schichtdicke betrug 60 bis 70 µm.

Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines thermoplastisch verarbeitbaren Polyurethans (Elastollan 1185 A10, haftungsmodifiziert mit 5 Ma.-% MDI (Diphenylmethan-4,4'-diisocyanat)) bei einer Schmelzetemperatur von 200 °C.

Die überspritzte Fläche besaß die Abmessungen von 120×25 (in mm), Dicke: 2 mm. Die Prüfung der Verbundfestigkeit zwischen dem TPU und der lackierten MDF-Platte erfolgte mit einem Schältestverfahren. Die Schälkraft betrug 165 N.

Dies ist für diese Materialkombination eine gute Verbundfestigkeit.

### Beispiel 8

Als Basismaterial wurde eine SMC-Platte (Sheet Molding Compound, SMC-Class A, Polytec Group). der Abmessung 120×50×4 (in mm) mit Pulverlack (PUR-Pulverlack 2, s. Beispiel 3) beschichtet. Die Schichtdicke betrug 70 bis 80 µm.

Die SMC-Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines thermoplastisch verarbeitbaren Polyurethans (Elastollan 1185 A10, haftungsmodifiziert mit 3 Ma.-% MDI (Diphenylmethan-4,4'-diisocyanat)) bei einer Schmelzetemperatur von 200 °C.

Die überspritzte Fläche besaß die Abmessungen von 120×25 (in mm), Dicke: 1,5 mm. Die Prüfung der Verbundfestigkeit zwischen dem TPU und der lackierten SMC-Platte erfolgte mit einem Schältestverfahren. Die Schälkraft betrug 170 N.

Dies ist für technische Anwendungen eine gute Verbundfestigkeit.

### Beispiel 9

Als Werkstoffkomponente wurde eine Stahlplatte der Abmessung 120×50×2 (in mm) mit Pulverlack (PUR-Pulverlack mit der Zusammensetzung: 25 % amorphes OH-funktionalisiertes Polyesterharz, 10 % teilkristallines Polyesterharz, 30 % Uretdion-Härter, 2 % Epoxid und 0,5 % Katalysator sowie 30 % Weißpigment (TiO₂) und Additive (Verlaufsmittel, Entgasungsmittel), ausgehärtet als Lack mit Allophanatgruppen und einem Restanteil an Uretdiongruppen, beschichtet. Die Schichtdicke betrug 80 bis 85 µm.

Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines thermoplastisch verarbeitbaren Copolyesterelastomers (TPC), reaktiv modifiziert mit OH-Endgruppen, (Hytrel, OH-modifiziert) bei einer Schmelzetemperatur von 225 °C.

Die überspritzte Fläche besaß die Abmessungen von 120x25 (in mm), Dicke: 1,0 mm. Die Prüfung der Verbundfestigkeit zwischen dem thermoplastischen Copolyesterelastomer und dem lackierten Stahlbauteil erfolgte mit einem Rollenschältest in Anlehnung an DIN EN 2243T3. Die Schälkraft betrug 145 N.

Für technische Anwendungen zur Verbundbildung ist dies für entsprechende Bauteile eine ausreichend gute Verbundfestigkeit.

### Beispiel 10

Als Werkstoffkomponente wurde eine Stahlplatte der Abmessung 120×50×2 (in mm) mit einer Schmelze aus PUR-Lack (PUR-Lack mit der Zusammensetzung: 55 % amorphes OH-funktionalisiertes Polyesterharz, 35 % Uretdion-Härter, 2 % Epoxid und 0,5 % Katalysator sowie 5 % Weißpigment (TiO₂) und Additive (Verlaufsmittel, Entgasungsmittel), ausgehärtet als Lack mit Allophanatgruppen, beschichtet. Die Schichtdicke betrug 90 bis 100 µm.

Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines thermoplastisch verarbeitbaren Polyetheramidelastomers mit OH-Endgruppen, (OH-modifiziertes PEBA-Material) bei einer Schmelzetemperatur von 240 °C.

Die überspritzte Fläche besaß die Abmessungen von 120x25 (in mm), Dicke: 1,5 mm. Die Prüfung der Verbundfestigkeit zwischen dem thermoplastischen Polyetheramidelastomer und dem lackierten Stahlbauteil erfolgte mit einem Rollenschältest in Anlehnung an DIN EN 2243T3. Die Schälkraft betrug 180 N.

Für technische Anwendungen zur Verbundbildung ist dies für entsprechende Bauteile eine gute Verbundfestigkeit.

### Beispiel 11

Als Werkstoffkomponente wurde eine Stahlplatte der Abmessung 120×50×2 (in mm) mit einer Schmelze aus PUR-Lack (PUR-Lack mit der Zusammensetzung: 50 % amorphes OH-funktionalisiertes Polyesterharz, 40 % Uretdion-Härter, 2 % Epoxid und 0,5 % Katalysator sowie 5 % Weißpigment (TiO₂) und Additive (Verlaufsmittel, Entgasungsmittel), ausgehärtet als Lack mit Allophanatgruppen, beschichtet. Die Schichtdicke betrug 80 bis 95 µm.

Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines thermoplastisch verarbeitbaren Polyesteramidelastomers mit OH-Endgruppen, (ähnlicher Blockcopolymeraufbau wie bei den PEBA-Materialien, OH-modifiziert) bei einer Schmelzetemperatur von 220 °C.

Die überspritzte Fläche besaß die Abmessungen von 120×25 (in mm), Dicke: 1,2 mm. Die Prüfung der Verbundfestigkeit zwischen dem thermoplastischen Polyesteramidelastomer und dem lackierten Stahlbauteil erfolgte mit einem Rollenschältest in Anlehnung an DIN EN 2243T3. Die Schälkraft betrug 155 N.

Für technische Anwendungen zur Verbundbildung ist dies für entsprechende Bauteile eine ausreichend gute Verbundfestigkeit.

### Beispiel 12

Als Werkstoffkomponente wurde eine Stahlplatte der Abmessung 120×50×2 (in mm) mit Pulverlack (PUR-Pulverlack 1 mit der Zusammensetzung: 40 % amorphes OH-funktionalisiertes Polyesterharz, 25 % Uretdion-Härter, 2 % Epoxid und 0,5 % Katalysator sowie 30 % Weißpigment (TiO₂) und Additive (Verlaufsmittel, Entgasungsmittel), ausgehärtet als Lack mit Allophanatgruppen, beschichtet. Die Schichtdicke betrug 65 bis 80 µm.

Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines Blends aus thermoplastisch verarbeitbarem Polyurethan und modifiziertem EVA (70 % Elastollan 1185 A10 und 30 % Maleinsäureanhydridgepfropftes EVA, reaktiv compoundiert = EVA*) bei einer Schmelzetemperatur von 215 °C.

Die überspritzte Fläche besaß die Abmessungen von 120×25 (in mm), Dicke: 0,8 mm. Die Prüfung der Verbundfestigkeit zwischen dem Blend (70TPU/30EVA*) und dem lackierten Stahlbauteil erfolgte mit einem Rollenschältest in Anlehnung an DIN EN 2243T3. Die Schälkraft betrug 215 N.

Für technische Anwendungen zur Verbundbildung weist dieser Wert für entsprechende Bauteile eine gute Verbundfestigkeit auf.

### Beispiel 13

Als Basismaterial wurde eine Aluminium-Platte der Abmessung 120×50×2 (in mm) mit einem Epoxy-Pulverlack (Epoxy-Pulverlack, bestehend aus carboxylgruppenterminiertem Polyesterharz und Araldit PT910 mit einem Überschuss an Epoxygruppen von 15 %, 0,5 % Katalysator sowie 10 % Weißpigment (TiO₂) und Additive (Verlaufsmittel, Entgasungsmittel) beschichtet. Die Schichtdicke betrug 60 bis 70 µm.

Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines thermoplastisch verarbeitbaren, carboxylgruppenterminierten Copolyesterelastomers (TPC) bei einer Schmelzetemperatur von 215 °C.

Die überspritzte Fläche besaß die Abmessungen von 120×25 (in mm), Dicke: 1,2 mm. Die Prüfung der Verbundfestigkeit zwischen dem speziell modifizierten Copolyesterelastomer und dem lackierten Stahlbauteil erfolgte mit einem Rollenschältest in Anlehnung an DIN EN 2243T3. Die Schälkraft betrug 135 N.

Für technische Anwendungen zur Verbundbildung weist dieser Wert für entsprechende Bauteile eine ausreichend gute Verbundfestigkeit auf.

### Beispiel 14 (Sandwich: TPU-Hautkomponente; PA6/GF-Kernkomponente)

Als Basismaterial wurde eine Aluminium-Platte der Abmessung 120×50×2 (in mm) mit Pulverlack (PUR-Pulverlack 2, s. Beispiel 3) beschichtet. Die Schichtdicke betrug 70 bis 85 µm.

Die Platte wurde in ein Spritzgießwerkzeug, das auf einer 2-Komponenten-Spritzgießmaschine Typ ENGEL ES 200H/80V/50 HL-2F (ausgerüstet mit einem speziellen druckgesteuerten 2K-Plattensystem zum Sandwichspritzgießen) aufgespannt war, eingelegt und fixiert.

Nach dem Schließen des Spritzgießwerkzeuges durch die Spritzgießmaschine erfolgte dann das Sandwichspritzgießen in der Form, dass die TPU-Komponente Elastollan 1185 A10 mit 220°C als Hautkomponente vorgespritzt und das PA6/GF (Ultramid B3EG6, BASF) mit 285°C als Kernkomponente nachgespritzt wurde. Durch die chemische Kompatibilität zwischen Lackschicht und TPU sowie TPU und PA6/GF sowie durch die Ausbildung zusätzlicher kovalenter Bindungen zwischen Lack und TPU sowie TPU und PA6/GF wird eine sehr gute Haftung der Materialien miteinander erzielt.

Die Prüfung der Verbundfestigkeit zwischen dem TPU-PA6/GF-Sandwichstempel (senkrecht auf der lackierten Aluminiumplatte stehend) und der lackierten Aluminiumplatte mit einer kreisrunden Kontaktfläche mit einem Durchmesser von 10 mm wurde in Anlehnung an den Zugversuch DIN ISO 53455 bestimmt. Die Zugfestigkeit betrug 29,1 N/mm², was eine sehr gute Verbundfestigkeit für technische Anwendungen ist.

### Beispiel 15 (Sandwich: TPU-Hautkomponente; PC-Kernkomponente)

Als Basismaterial wurde eine Aluminium-Platte der Abmessung 120×50×2 (in mm) mit Pulverlack (PUR-Pulverlack 1, s. Beispiel 1) beschichtet. Die Schichtdicke betrug 65 bis 85 µm.

Die Platte wurde in ein Spritzgießwerkzeug, das auf einer 2-Komponenten-Spritzgießmaschine Typ ENGEL ES 200H/80V/50 HL-2F (ausgerüstet mit einem speziellen druckgesteuerten 2K-Plattensystem zum Sandwichspritzgießen) aufgespannt war, eingelegt und fixiert.

Nach dem Schließen des Spritzgießwerkzeuges durch die Spritzgießmaschine erfolgte dann das Sandwichspritzgießen in der Form, dass die TPU-Komponente Elastollan 1185 A10 mit 220°C als Hautkomponente vorgespritzt und das PC (Polycarbonat Lexan 121, GE-Plastics) mit 285°C als Kernkomponente nachgespritzt wurde. Durch die chemische Kompatibilität zwischen Lackschicht und TPU sowie TPU und PC sowie durch die Ausbildung zusätzlicher kovalenter Bindungen zwischen Lack und TPU sowie TPU und PC wird eine sehr gute Haftung der Materialien miteinander erzielt.

Die Prüfung der Verbundfestigkeit zwischen dem TPU-PC-Sandwichstempel (senkrecht auf der lackierten Aluminiumplatte stehend) und der lackierten Aluminiumplatte mit einer kreisrunden Kontaktfläche mit dem Durchmesser von 10 mm wurde in Anlehnung an den Zugversuch DIN ISO 53455 bestimmt. Die Zugfestigkeit betrug 26,5 N/mm², was eine sehr gute Verbundfestigkeit für technische Anwendungen ist.

### Beispiel 16

Als Werkstoffkomponente wurde eine Aluminiumplatte der Abmessung 120×50×2 (in mm) mit Pulverlack (PUR-Pulverlack 2 s. Beispiel 3) beschichtet. Die Schichtdicke betrug 60 bis 75 µm.

Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines thermoplastisch verarbeitbaren Polyurethan-Polyethylen-Blends (Elastollan 1185 A10, reaktiv compoundiert mit 30 % LLDPE-gMAn (Maleinsäureanhydrid-modifiziertes LLDPE, Scona TSPE 1112 GALL, Kometra GmbH)) bei einer Schmelzetemperatur von 215 °C als dünne Schicht von 1,0 mm. Die überspritzte Fläche besaß die Abmessungen von 120×25 (in mm). In einem zweiten Schritt wird die so lokal mit einer TPU/PE-Blend-Schicht oberflächenmodifizierte Aluminiumplatte in einem zweiten Werkzeug mit einem PE in einem Overmolding-Prozess überspritzt.

Die Prüfung der Verbundfestigkeit zwischen dem PE und dem lackierten Aluminiumbauteil erfolgte mit einem Schertestverfahren. Die Scherkraft betrug 270 N. Für technische Anwendungen ist dies eine sehr gute Verbundfestigkeit.

### Beispiel 17

Als Werkstoffkomponente wurde eine Aluminiumplatte der Abmessung 120×50×2 (in mm) mit Pulverlack (PUR-Pulverlack 2 s. Beispiel 3) beschichtet. Die Schichtdicke betrug 60 bis 75 µm.

Die Platte wurde in ein Spritzgießwerkzeug, das auf einer Spritzgießmaschine mit 500 kN Schließkraft aufgespannt war, eingelegt und fixiert.

Nach dem Schließen des Spritzgießwerkzeuges durch die Spritzgießmaschine erfolgte das Einspritzen eines thermoplastisch verarbeitbaren Polyurethan-Polypropylen-Blends (Elastollan 1185 A10, reaktiv compoundiert mit 30 % PP-gMAn (Maleinsäureanhydrid-modifiziertes PP, Scona TPPP 2112 FA, Kometra GmbH)) bei einer Schmelzetemperatur von 215 °C als dünne Schicht von 1,0 mm. Die überspritzte Fläche besaß die Abmessungen von 120×25 (in mm). In einem zweiten Schritt wird die so lokal mit einer TPU/PP-Blend-Schicht oberflächenmodifizierte Aluminiumplatte in einem zweiten Werkzeug mit einem glasfaserverstärktes PP in einem Overmolding-Prozess überspritzt.

Die Prüfung der Verbundfestigkeit erfolgte mit einem Schertestverfahren. Die Scherkraft betrug 345 N. Für technische Anwendungen ist dies eine sehr gute Verbundfestigkeit.

## Patentansprüche

1. Verfahren zur Herstellung von Werkstoff-Kunststoff-Verbunden, bei dem auf mindestens eine Werkstoffkomponente eine Schicht aus einem Lack aufgebracht, verfilmt und (teil-)vernetzt wird,
- wobei der (teil-)vernetzte Lack (re-)aktive freie Isocyanatgruppen und/oder Epoxygruppen und/oder unter thermischer Rückspaltung deblockierbare Isocyanatgruppen und/oder (thermisch und/oder katalytisch) aktivierbare Uretdiongruppen und/oder Allophanatgruppen und/oder Biuretgruppen aufweist, und nachfolgend mindestens eine elastische Kunststoffkomponente mittels eines thermischen Auftragungsverfahrens im schmelzflüssigen Zustand mindestens teilweise auf die (teil-)vernetzte Lackschicht aufgebracht wird, wobei die Kunststoffkomponente funktionelle Gruppen aufweist, die fähig sind, im schmelzflüssigen Zustand mit den (re-)aktiven und/oder (thermisch und/oder katalytisch) aktivierbaren Gruppen des (teil-)vernetzten Lackes eine kovalente Bindung in Form von Urethangruppen und/oder Allophanatgruppen und/oder Harnstoffgruppen und/oder Biuretgruppen und/oder Estergruppen und/oder Ethergruppen und/oder Amidgruppen und/oder Amingruppen einzugehen,
oder
- wobei der (teil-)vernetzte Lack funktionelle Gruppen in Form von Epoxygruppen und/oder Hydroxygruppen und/oder Carbonsäuregruppen aufweist, und nachfolgend mindestens eine elastische Kunststoffkomponente mittels eines thermischen Auftragungsverfahrens im schmelzflüssigen Zustand mindestens teilweise auf die Lackschicht aufgebracht wird, wobei die Kunststoffkomponente freie und/oder thermisch deblockierbare Isocyanatgruppen und/oder Uretdiongruppen und/oder Allophanatgruppen und/oder Biuretgruppen und/oder Epoxygruppen aufweist, die fähig sind, im schmelzflüssigen Zustand mit den funktionellen Gruppen des (teil-)vernetzten Lackes eine kovalente Bindung einzugehen,
und wobei der Lack nach der Aufbringung der elastischen Kunststoffkomponente und während der gesamten weiteren Verarbeitung zu Werkstoff-Kunststoff-Verbunden nicht aufgeschmolzen und der Verbund nicht thermisch nachbehandelt wird.

2. Werkstoff-Kunststoff-Verbunde, hergestellt nach einem Verfahren nach Anspruch 1, bestehend aus mindestens einer Werkstoffkomponente und mindestens einer elastischen Kunststoffkomponente, wobei zwischen ihnen mindestens teilweise ein (teil-)vernetzter Lack angeordnet ist,
- wobei die (re-)aktiven freien Isocyanatgruppen und/oder Epoxygruppen und/oder die unter thermischer Rückspaltung deblockierten Isocyanatgruppen und/oder die (thermisch und/oder katalytisch) aktivierbaren Uretdiongruppen und/oder Allophanatgruppen und/oder Biuretgruppen des (teil-)vernetzten Lackes mit den funktionellen Gruppen der elastischen Kunststoffkomponente reagiert haben und eine kovalente Bindung über Urethangruppen und/oder Allophanatgruppen und/oder Harnstoffgruppen und/oder Biuretgruppen und/oder Estergruppen und/oder Ethergruppen und/oder Amidgruppen und/oder Amingruppen zwischen dem (teil-)vernetztem Lack und der elastischen Kunststoffkomponente ausgebildet ist,
oder
- wobei die reaktiven funktionellen Hydroxygruppen und/oder Carbonsäuregruppen und/oder Epoxygruppen des (teil-)vernetzten Lackes mit freien Isocyanatgruppen und/oder unter thermischer Rückspaltung deblockierten Isocyanatgruppen und/oder (thermisch und/oder katalytisch) aktivierten Uretdiongruppen und/oder Allophanatgruppen und/oder Biuretgruppen und/oder Epoxygruppen der elastischen Kunststoffkomponente reagiert haben und eine kovalente Bindung über Urethangruppen und/oder Allophanatgruppen und/oder Estergruppen und/oder Ethergruppen und/oder Amidgruppen zwischen dem (teil-)vernetztem Lack und der elastischen Kunststoffkomponente ausgebildet ist,
wobei die kovalenten Bindungen durch Additionsreaktionen der freien Isocyanatgruppen und/oder der unter thermischer Rückspaltung deblockierten Isocyanatgruppen und/oder unter thermischer und/oder katalytischer Aktivierung der Uretdiongruppen und/oder Allophanatgruppen und/oder Biuretgruppen und/oder Epoxygruppen und deren Reaktion mit funktionellen Gruppen und unter Ausschluss von Radikalreaktionen entstanden sind,
und, wobei der Lack nach der Aufbringung während der gesamten weiteren Bearbeitung zu Werkstoff-Kunststoff-Verbunden nicht wieder aufgeschmolzen worden ist, und die elastische Kunststoffkomponente im schmelzflüssigen Zustand mindestens teilweise auf die Lackschicht durch ein thermisches Auftragungsverfahren aufgebracht ist, ohne eine thermische Nachbehandlung nach der Verbundbildung.

3. Werkstoff-Kunststoff-Verbunde bestehend aus mindestens einer Werkstoffkomponente, mindestens einer elastischen und mindestens einer thermoplastischen, harten Kunststoffkomponente, wobei die Werkstoffkomponente mit mindestens einem (teil-)vernetzten Lack beschichtet ist,
- wobei die (re-)aktiven freien Isocyanatgruppen und/oder Epoxygruppen und/oder die unter thermischer Rückspaltung deblockierten Isocyanatgruppen und/oder die (thermisch und/oder katalytisch) aktivierbaren Uretdiongruppen und/oder Allophanatgruppen und/oder Biuretgruppen des (teil-)vernetzten Lackes mit den funktionellen Gruppen der elastischen Kunststoffkomponente reagiert haben und eine kovalente Bindung über Urethangruppen und/oder Allophanatgruppen und/oder Harnstoffgruppen und/oder Biuretgruppen und/oder Estergruppen und/oder Ethergruppen und/oder Amidgruppen und/oder Amingruppen zwischen dem (teil-)vernetztem Lack und der elastischen Kunststoffkomponente ausgebildet ist,
oder
- wobei die reaktiven funktionellen Hydroxygruppen und/oder Carbonsäuregruppen und/oder Epoxygruppen des (teil-)vernetzten Lackes mit freien Isocyanatgruppen und/oder unter thermischer Rückspaltung deblockierten Isocyanatgruppen und/oder (thermisch und/oder katalytisch) aktivierten Uretdiongruppen und/oder Allophanatgruppen und/oder Biuretgruppen und/oder Epoxygruppen der elastischen Kunststoffkomponente reagiert haben und eine kovalente Bindung über Urethangruppen und/oder Allophanatgruppen und/oder Estergruppen und/oder Ethergruppen und/oder Amidgruppen zwischen dem (teil-)vernetztem Lack und der elastischen Kunststoffkomponente ausgebildet ist,
und
wobei die elastische Kunststoffkomponente die Verbindung zwischen der Lackschicht und der thermoplastischen, harten Kunststoffkomponente bildet,
und
wobei die kovalenten Bindungen durch Additionsreaktionen der freien Isocyanatgruppen und/oder der unter thermischer Rückspaltung deblockierten Isocyanatgruppen und/oder unter thermischer und/oder katalytischer Aktivierung der Uretdiongruppen und/oder Allophanatgruppen und/oder Biuretgruppen und/oder Epoxygruppen und deren Reaktion mit funktionellen Gruppen und unter Ausschluss von Radikalreaktionen entstanden sind,
und
wobei der Lack nach der Aufbringung während der gesamten weiteren Bearbeitung zu Werkstoff-Kunststoff-Verbunden nicht wieder aufgeschmolzen worden ist, und die elastische Kunststoffkomponente mindestens teilweise auf die Lackschicht durch ein thermisches Auftragungsverfahren und die thermoplastische, harte Kunststoffkomponente mindestens teilweise auf der elastischen Kunststoffkomponente durch ein thermisches Auftragungsverfahren aufgebracht ist oder die elastische und die thermoplastische, harte Kunststoffkomponenten im Sandwich-(Spritzgieß-)Verfahren mindestens teilweise auf die Lackschicht aufgebracht sind, wobei die elastische Komponente im Sandwichverfahren die Hautkomponente bildet, ohne eine thermische Nachbehandlung nach der Verbundbildung.

4. Werkstoff-Kunststoff-Verbunde bestehend aus mindestens einer Werkstoffkomponente, mindestens einer elastischen und einer duromeren Kunststoffkomponente, wobei die Werkstoffkomponente mit mindestens einem (teil-)vernetzten Lack beschichtet ist,
- wobei die (re-)aktiven freien Isocyanatgruppen und/oder Epoxygruppen und/oder die unter thermischer Rückspaltung deblockierten Isocyanatgruppen und/oder die (thermisch und/oder katalytisch) aktivierbaren Uretdiongruppen und/oder Allophanatgruppen und/oder Biuretgruppen des (teil-)vernetzten Lackes mit den funktionellen Gruppen der elastischen Kunststoffkomponente reagiert haben und eine kovalente Bindung über Urethangruppen und/oder Allophanatgruppen und/oder Harnstoffgruppen und/oder Biuretgruppen und/oder Estergruppen und/oder Ethergruppen und/oder Amidgruppen und/oder Amingruppen zwischen dem (teil-)vernetztem Lack und der elastischen Kunststoffkomponente ausgebildet ist,
oder
- wobei die reaktiven funktionellen Hydroxygruppen und/oder Carbonsäuregruppen und/oder Epoxygruppen des (teil-)vernetzten Lackes mit freien Isocyanatgruppen und/oder unter thermischer Rückspaltung deblockierten Isocyanatgruppen und/oder (thermisch und/oder katalytisch) aktivierten Uretdiongruppen und/oder Allophanatgruppen und/oder Biuretgruppen und/oder Epoxygruppen der elastischen Kunststoffkomponente reagiert haben und eine kovalente Bindung über Urethangruppen und/oder Allophanatgruppen und/oder Estergruppen und/oder Ethergruppen und/oder Amidgruppen zwischen dem (teil-)vernetztem Lack und der elastischen Kunststoffkomponente ausgebildet ist,
und
wobei die elastische Kunststoffkomponente die Verbindung zwischen der Lackschicht und der duromeren Kunststoffkomponente bildet,
und
wobei die kovalenten Bindungen durch Additionsreaktionen der freien Isocyanatgruppen und/oder der unter thermischer Rückspaltung deblockierten Isocyanatgruppen und/oder unter thermischer und/oder katalytischer Aktivierung der Uretdiongruppen und/oder Allophanatgruppen und/oder Biuretgruppen und/oder Epoxygruppen und deren Reaktion mit funktionellen Gruppen und unter Ausschluss von Radikalreaktionen entstanden sind,
und
wobei der Lack nach der Aufbringung während der gesamten weiteren Bearbeitung zu Werkstoff-Kunststoff-Verbunden nicht wieder aufgeschmolzen worden ist, und die elastische Kunststoffkomponente mindestens teilweise auf die Lackschicht durch ein thermisches Auftragungsverfahren und die duromere Kunststoffkomponente mindestens teilweise auf der elastischen Kunststoffkomponente durch ein thermisches Auftragungsverfahren der Duromerverarbeitung aufgebracht ist, ohne eine thermische Nachbehandlung nach der Verbundbildung.

5. Werkstoff-Kunststoff-Verbunde nach Anspruch 2 oder 3 oder 4, bei denen die Werkstoffkomponente aus Metall und dessen Modifikationen, Holz und dessen Modifikationen, Kunststoff und dessen Modifikationen, Keramik und dessen Modifikationen oder deren Werkstoffkombinationen besteht.

6. Werkstoff-Kunststoff-Verbunde nach Anspruch 2 oder 3 oder 4, bei denen die elastische Kunststoffkomponente aus thermoplastisch verarbeitbaren Elastomeren/thermoplastischen Elastomeren (TPE), insbesondere aus Polyurethan besteht, das funktionelle Gruppen zur Ausbildung von kovalenten Bindungen mit (re-)aktiven und/oder (thermisch und/oder katalytisch) aktivierbaren Gruppen der Lackschicht besitzt oder das (re-)aktive und/oder (thermisch und/oder katalytisch) aktivierbare Gruppen zur Ausbildung von kovalenten Bindungen mit funktionellen Gruppen der Lackschicht besitzt.

7. Werkstoff-Kunststoff-Verbunde nach Anspruch 2 oder 3 oder 4, bei dem die elastische Kunststoffkomponente durch Extrusion, Spritzpressen oder Schäumen (Dolphin-Verfahren), vorteilhafterweise durch Mehrkomponentenspritzgießen oder Sandwich-(spritzgieß-)Verfahren, aufgebracht ist.

8. Verfahren zur Herstellung von Werkstoff-Kunststoff-Verbunden, bei dem auf mindestens eine Werkstoffkomponente eine Schicht aus einem Lack aufgebracht, verfilmt und (teil-)vernetzt wird,
- wobei der (teil-)vernetzte Lack (re-)aktive freie Isocyanatgruppen und/oder Epoxygruppen und/oder unter thermischer Rückspaltung deblockierbare Isocyanatgruppen und/oder (thermisch und/oder katalytisch) aktivierbare Uretdiongruppen und/oder Allophanatgruppen und/oder Biuretgruppen aufweist, und nachfolgend mindestens eine elastische Kunststoffkomponente mittels eines thermischen Auftragungsverfahrens im schmelzflüssigen Zustand mindestens teilweise auf die (teil-)vernetzte Lackschicht aufgebracht wird, wobei die Kunststoffkomponente funktionelle Gruppen aufweist, die fähig sind, im schmelzflüssigen Zustand mit den (re-)aktiven und/oder (thermisch und/oder katalytisch) aktivierbaren Gruppen des (teil-)vernetzten Lackes eine kovalente Bindung in Form von Urethangruppen und/oder Allophanatgruppen und/oder Harnstoffgruppen und/oder Biuretgruppen und/oder Estergruppen und/oder Ethergruppen und/oder Amidgruppen und/oder Amingruppen einzugehen,
oder
- wobei der (teil-)vernetzte Lack funktionelle Gruppen in Form von Epoxygruppen und/oder Hydroxygruppen und/oder Carbonsäuregruppen aufweist, und nachfolgend mindestens eine elastische Kunststoffkomponente mittels eines thermischen Auftragungsverfahrens im schmelzflüssigen Zustand mindestens teilweise auf die Lackschicht aufgebracht wird, wobei die Kunststoffkomponente freie und/oder thermisch deblockierbare Isocyanatgruppen und/oder Uretdiongruppen und/oder Allophanatgruppen und/oder Biuretgruppen und/oder Epoxygruppen aufweist, die fähig sind, im schmelzflüssigen Zustand mit den funktionellen Gruppen des (teil-)vernetzten Lackes eine kovalente Bindung einzugehen,
und mindestens eine thermoplastische harte Kunststoffkomponente mittels eines thermischen Auftragungsverfahrens mindestens teilweise auf die elastomere Kunststoffkomponente im Mehrkomponentenverfahren aufgebracht wird,
und wobei der Lack nach der Aufbringung der elastischen Kunststoffkomponente und während der gesamten weiteren Verarbeitung zu Werkstoff-Kunststoff-Verbunden nicht aufgeschmolzen und der Verbund nicht thermisch nachbehandelt wird.

9. Verfahren zur Herstellung von Werkstoff-Kunststoff-Verbunden, bei dem auf mindestens eine Werkstoffkomponente eine Schicht aus einem Lack aufgebracht, verfilmt und (teil-)vernetzt wird,
- wobei der (teil-)vernetzte Lack (re-)aktive freie Isocyanatgruppen und/oder Epoxygruppen und/oder unter thermischer Rückspaltung deblockierbare Isocyanatgruppen und/oder (thermisch und/oder katalytisch) aktivierbare Uretdiongruppen und/oder Allophanatgruppen und/oder Biuretgruppen aufweist, und nachfolgend mindestens eine elastische Kunststoffkomponente mittels eines thermischen Auftragungsverfahrens im schmelzflüssigen Zustand mindestens teilweise auf die (teil-)vernetzte Lackschicht aufgebracht wird, wobei die Kunststoffkomponente funktionelle Gruppen aufweist, die fähig sind, im schmelzflüssigen Zustand mit den (re-)aktiven und/oder (thermisch und/oder katalytisch) aktivierbaren Gruppen des (teil-)vernetzten Lackes eine kovalente Bindung in Form von Urethangruppen und/oder Allophanatgruppen und/oder Harnstoffgruppen und/oder Biuretgruppen und/oder Estergruppen und/oder Ethergruppen und/oder Amidgruppen und/oder Amingruppen einzugehen,
oder
- wobei der (teil-)vernetzte Lack funktionelle Gruppen in Form von Epoxygruppen und/oder Hydroxygruppen und/oder Carbonsäuregruppen aufweist, und nachfolgend mindestens eine elastische Kunststoffkomponente mittels eines thermischen Auftragungsverfahrens im schmelzflüssigen Zustand mindestens teilweise auf die Lackschicht aufgebracht wird, wobei die Kunststoffkomponente freie und/oder thermisch deblockierbare Isocyanatgruppen und/oder Uretdiongruppen und/oder Allophanatgruppen und/oder Biuretgruppen Epoxygruppen aufweist, die fähig sind, im schmelzflüssigen Zustand mit den funktionellen Gruppen des (teil-)vernetzten Lackes eine kovalente Bindung einzugehen,
und mindestens eine duromere Kunststoffkomponente mittels eines thermischen Auftragungsverfahrens mindestens teilweise auf die elastomere Kunststoffkomponente aufgebracht wird,
und wobei der Lack nach der Aufbringung während der gesamten weiteren Verarbeitung zu Werkstoff-Kunststoff-Verbunden nicht aufgeschmolzen und der Verbund nicht thermisch nachbehandelt wird.

10. Verfahren nach den Ansprüchen 1 oder 8 oder 9, bei dem als Werkstoffkomponenten Metall und dessen Modifikationen, Holz und dessen Modifikationen, Kunststoff und dessen Modifikationen, Keramik und dessen Modifikationen oder deren Werkstoffkombinationen eingesetzt werden.

11. Verfahren nach den Ansprüchen 1 oder 8 oder 9, bei dem als elastische Kunststoffkomponente thermoplastisch verarbeitbare Elastomere/thermoplastische Elastomere (TPE), insbesondere Polyurethan, das (re-)aktive und/oder (thermisch und/oder katalytisch) aktivierbare Gruppen zur Ausbildung von kovalenten Bindungen mit funktionellen Gruppen der Lackschicht besitzt oder das funktionelle Gruppen zur Ausbildung von kovalenten Bindungen mit (re-)aktiven und/oder (thermisch und/oder katalytisch) aktivierbaren Gruppen der Lackschicht besitzt, eingesetzt werden.

12. Verfahren nach den Ansprüchen 1 oder 8 oder 9, bei dem die elastische Kunststoffkomponente durch Extrusion, (Mehrkomponenten-)Spritzgießen, Spritzpressen oder Sandwich-(spritzgieß-)Verfahren oder Schäumen (Dolphin-Verfahren) aufgebracht wird.

13. Verfahren nach den Ansprüchen 1 oder 8 oder 9, bei dem die elastische Kunststoffkomponente als Zwischenschicht mit einer Dicke von 0,1 bis 10 mm und vorzugsweise von 0,5 bis 2 mm oder als Funktionsschicht aufgebracht wird und/oder bei dem die elastische Kunststoffkomponente als Zwischenschicht oder als Funktionsschicht modifiziert und/oder gefüllt und/oder verstärkt aufgebracht wird.

14. Verfahren nach den Ansprüchen 1 oder 8 oder 9, bei dem die thermoplastische harte Kunststoffkomponente modifiziert und/oder gefüllt und/oder verstärkt aufgebracht wird, und/oder bei dem die duromere Kunststoffkomponente modifiziert und/oder gefüllt und/oder verstärkt aufgebracht wird.

15. Verfahren nach den Ansprüchen 1 oder 8 oder 9, bei dem die Lackschicht aus einer Lösung oder Dispersion oder als Pulver oder als Schmelze oder als flüssiges 100%-System aufgebracht wird.

## Claims

1. Method for producing materials-plastic composites, wherein a layer of a coating material is applied to at least one materials component, filmed and (partially) crosslinked,
- where the (partially) crosslinked coating material has (re-)active free isocyanate groups and/or epoxy groups and/or isocyanate groups deblockable with thermal redissociation and/or (thermally and/or catalytically) activatable uretdione groups and/or allophanate groups and/or biuret groups, and subsequently at least one elastic plastics component is applied in the liquid-melt state at least partially to the (partially) crosslinked coating film by means of a thermal application method, where the plastics component has functional groups which are capable in the liquid-melt state of entering, with the (re-)active and/or (thermally and/or catalytically) activatable groups of the (partially) crosslinked coating material, into a covalent bond in the form of urethane groups and/or allophanate groups and/or urea groups and/or biuret groups and/or ester groups and/or ether groups and/or amide groups and/or amine groups,
or
- where the (partially) crosslinked coating material has functional groups in the form of epoxy groups and/or hydroxyl groups and/or carboxyl groups, and subsequently at least one elastic plastics component is applied in the liquid-melt state at least partially to the coating film by means of a thermal application method, where the plastics component has free and/or thermally deblockable isocyanate groups and/or uretdione groups and/or allophanate groups and/or biuret groups and/or epoxy groups which are capable in the liquid-melt state of entering into a covalent bond with the functional groups of the (partially) crosslinked coating material,
and where the coating material, after the application of the elastic plastics component and during the entire further processing to form materials-plastic composites, is not melted and the composite is not thermally aftertreated.

2. Materials-plastic composites produced by a method according to Claim 1, consisting of at least one materials component and at least one elastic plastics component, there being a (partially) crosslinked coating material disposed at least partially between them,
- where the (re-)active free isocyanate groups and/or epoxy groups and/or the isocyanate groups deblocked with thermal redissociation and/or the (thermally and/or catalytically) activatable uretdione groups and/or allophanate groups and/or biuret groups of the (partially) crosslinked coating material have reacted with the functional groups of the elastic plastics component and a covalent bond has formed via urethane groups and/or allophanate groups and/or urea groups and/or biuret groups and/or ester groups and/or ether groups and/or amide groups and/or amine groups between the (partially) crosslinked coating material and the elastic plastics component,
or
- where the reactive functional hydroxyl groups and/or carboxyl groups and/or epoxy groups of the (partially) crosslinked coating material have reacted with free isocyanate groups and/or isocyanate groups deblocked with thermal redissociation and/or (thermally and/or catalytically) activated uretdione groups and/or allophanate groups and/or biuret groups and/or epoxy groups of the elastic plastics component and a covalent bond has formed via urethane groups and/or allophanate groups and/or ester groups and/or ether groups and/or amide groups between the (partially) crosslinked coating material and the elastic plastics component, where the covalent bonds have come about through addition reactions of the free isocyanate groups and/or of the isocyanate groups deblocked with thermal redissociation and/or with thermal and/or catalytic activation of the uretdione groups and/or allophanate groups and/or biuret groups and/or epoxy groups and reaction thereof with functional groups, and to the exclusion of radical reactions,
and where the coating material, following application and during the entire further working to form materials-plastic composites, has not been melted again, and the elastic plastics component is applied in the liquid-melt state at least partially to the coating film by a thermal application method, without a thermal aftertreatment after formation of composites.

3. Materials-plastic composites consisting of at least one materials component, at least one elastic and at least one thermoplastic, hard plastics component, where the materials component is coated with at least one (partially) crosslinked coating material,
- where the (re-)active free isocyanate groups and/or epoxy groups and/or the isocyanate groups deblocked with thermal redissociation and/or the (thermally and/or catalytically) activatable uretdione groups and/or allophanate groups and/or biuret groups of the (partially) crosslinked coating material have reacted with the functional groups of the elastics plastics component and a covalent bond has formed via urethane groups and/or allophanate groups and/or urea groups and/or biuret groups and/or ester groups and/or ether groups and/or amide groups and/or amine groups between the (partially) crosslinked coating material and the elastic plastics component,
or
- where the reactive functional hydroxyl groups and/or carboxyl groups and/or epoxy groups of the (partially) crosslinked coating material have reacted with free isocyanate groups and/or isocyanate groups deblocked with thermal redissociation and/or (thermally and/or catalytically) activated uretdione groups and/or allophanate groups and/or biuret groups and/or epoxy groups of the elastic plastics component and a covalent bond has formed via urethane groups and/or allophanate groups and/or ester groups and/or ether groups and/or amide groups between the (partially) crosslinked coating material and the elastic plastics component,
and
where the elastic plastics component forms the connection between the coating film and the thermoplastic, hard plastics component,
and
where the covalent bonds have come about through addition reactions of the free isocyanate groups and/or of the isocyanate groups deblocked with thermal redissociation and/or with thermal and/or catalytic activation of the uretdione groups and/or allophanate groups and/or biuret groups and/or epoxy groups and reaction thereof with functional groups, and to the exclusion of radical reactions,
and
where the coating material, following application and during the entire further working to form materials-plastic composites, has not been melted again, and the elastic plastics component is applied in the liquid-melt state at least partially to the coating film by a thermal application method, and the thermoplastic, hard plastics component is applied at least partially to the elastic plastics component by a thermal application method
or the elastic and the thermoplastic, hard plastics components are applied in a sandwich (injection moulding) method at least partially to the coating film, where the elastic component in the sandwich process forms the skin component, without a thermal aftertreatment after formation of composites.

4. Materials-plastic composites consisting of at least one materials component, at least one elastic and one thermoset plastics component, where the materials component is coated with at least one (partially) crosslinked coating material,
- where the (re-)active free isocyanate groups and/or epoxy groups and/or the isocyanate groups deblocked with thermal redissociation and/or the (thermally and/or catalytically) activatable uretdione groups and/or allophanate groups and/or biuret groups of the (partially) crosslinked coating material have reacted with the functional groups of the elastic plastics component and a covalent bond has formed via urethane groups and/or allophanate groups and/or urea groups and/or biuret groups and/or ester groups and/or ether groups and/or amide groups and/or amine groups between the (partially) crosslinked coating material and the elastic plastics component,
or
- where the reactive functional hydroxyl groups and/or carboxyl groups and/or epoxy groups of the (partially) crosslinked coating material have reacted with free isocyanate groups and/or isocyanate groups deblocked with thermal redissociation and/or (thermally and/or catalytically) activated uretdione groups and/or allophanate groups and/or biuret groups and/or epoxy groups of the elastic plastics component and a covalent bond has formed via urethane groups and/or allophanate groups and/or ester groups and/or ether groups and/or amide groups between the (partially) crosslinked coating material and the elastic plastics component,
and
where the elastic plastics component forms the connection between the coating film and the thermoset plastics component,
and
where the covalent bonds have come about through addition reactions of the free isocyanate groups and/or of the isocyanate groups deblocked with thermal redissociation and/or with thermal and/or catalytic activation of the uretdione groups and/or allophanate groups and/or biuret groups and/or epoxy groups and reaction thereof with functional groups, and to the exclusion of radical reactions,
and
where the coating material, following application and during the entire further working to form materials-plastic composites, has not been melted again, and the elastic plastics component is applied at least partially to the coating film by a thermal application method, and the thermoset plastics component is applied at least partially to the elastic plastics component by a thermal application method of the thermoset processing, without a thermal aftertreatment after formation of composites.

5. Materials-plastic composites according to Claim 2 or 3 or 4, wherein the materials component consists of metal and modifications thereof, wood and modifications thereof, plastic and modifications thereof, ceramic and modifications thereof, or combinations of said materials.

6. Materials-plastic composites according to Claim 2 or 3 or 4, wherein the elastic plastics component consists of thermoplastically processable elastomers/thermoplastic elastomers (TPE), more particularly of polyurethane which possesses functional groups for the formation of covalent bonds with (re-)active and/or (thermally and/or catalytically) activatable groups of the coating film or that possesses (re-)active and/or (thermally and/or catalytically) activatable groups for forming covalent bonds with functional groups of the coating film.

7. Materials-plastic composites according to Claim 2 or 3 or 4, wherein the elastic plastics component is applied by extrusion, transfer moulding or foaming (Dolphin process), advantageously by multi-component injection moulding or sandwich (injection moulding) processes.

8. Method for producing materials-plastic composites, wherein a layer of a coating material is applied to at least one materials component, filmed and (partially) crosslinked,
- where the (partially) crosslinked coating material has (re-)active free isocyanate groups and/or epoxy groups and/or isocyanate groups deblockable with thermal redissociation and/or (thermally and/or catalytically) activatable uretdione groups and/or allophanate groups and/or biuret groups, and subsequently at least one elastic plastics component is applied in the liquid-melt state at least partially to the (partially) crosslinked coating film by means of a thermal application method, where the plastics component has functional groups which are capable in the liquid-melt state of entering, with the (re-)active and/or (thermally and/or catalytically) activatable groups of the (partially) crosslinked coating material, into a covalent bond in the form of urethane groups and/or allophanate groups and/or urea groups and/or biuret groups and/or ester groups and/or ether groups and/or amide groups and/or amine groups,
or
- where the (partially) crosslinked coating material has functional groups in the form of epoxy groups and/or hydroxyl groups and/or carboxyl groups, and subsequently at least one elastic plastics component is applied in the liquid-melt state at least partially to the coating film by means of a thermal application method, where the plastics component has free and/or thermally deblockable isocyanate groups and/or uretdione groups and/or allophanate groups and/or biuret groups and/or epoxy groups which are capable in the liquid-melt state of entering into a covalent bond with the functional groups of the (partially) crosslinked coating material,
and at least one thermoplastic hard plastics component is applied in a multi-component process at least partially to the elastomeric plastics component by means of a thermal application method,
and where the coating material, after the application of the elastic plastics component and during the entire further processing to form materials-plastic composites, is not melted and the composite is not thermally aftertreated.

9. Method for producing materials-plastic composites, wherein a layer of a coating material is applied to at least one materials component, filmed and (partially) crosslinked,
- where the (partially) crosslinked coating material has (re-)active free isocyanate groups and/or epoxy groups and/or isocyanate groups deblockable with thermal redissociation and/or (thermally and/or catalytically) activatable uretdione groups and/or allophanate groups and/or biuret groups, and subsequently at least one elastic plastics component is applied in the liquid-melt state at least partially to the (partially) crosslinked coating film by means of a thermal application method, where the plastics component has functional groups which are capable in the liquid-melt state of entering, with the (re-)active and/or (thermally and/or catalytically) activatable groups of the (partially) crosslinked coating material, into a covalent bond in the form of urethane groups and/or allophanate groups and/or urea groups and/or biuret groups and/or ester groups and/or ether groups and/or amide groups and/or amine groups,
or
- where the (partially) crosslinked coating material has functional groups in the form of epoxy groups and/or hydroxyl groups and/or carboxyl groups, and subsequently at least one elastic plastics component is applied in the liquid-melt state at least partially to the coating film by means of a thermal application method, where the plastics component has free and/or thermally deblockable isocyanate groups and/or uretdione groups and/or allophanate groups and/or biuret groups epoxy groups which are capable in the liquid-melt state of entering into a covalent bond with the functional groups of the (partially) crosslinked coating material,
and at least one thermoset plastics component is applied at least partially to the elastomeric plastics component by means of a thermal application method,
and where the coating material, after the application and during the entire further processing to form materials-plastic composites, is not melted and the composite is not thermally aftertreated.

10. Method according to Claim 1 or 8 or 9, wherein materials components used are metal and modifications thereof, wood and modifications thereof, plastic and modifications thereof, ceramic and modifications thereof, or combinations of said materials.

11. Method according to Claim 1 or 8 or 9, wherein the elastic plastics component used comprises thermoplastically processable elastomers/thermoplastic elastomers (TPE), especially polyurethane which possesses (re-)active and/or (thermally and/or catalytically) activatable groups for forming covalent bonds with functional groups of the coating film, or that possesses functional groups for forming covalent bonds with (re-)active and/or (thermally and/or catalytically) activatable groups of the coating film.

12. Method according to Claim 1 or 8 or 9, wherein the elastic plastics component is applied by extrusion (multi-component) injection moulding, transfer moulding or sandwich (injection moulding) processes or foaming (Dolphin process).

13. Method according to Claim 1 or 8 or 9, wherein the elastic plastics component is applied as an intermediate layer with a thickness of 0.1 to 10 mm and preferably of 0.5 to 2 mm or as a functional layer and/or wherein the elastic plastics component is applied as an intermediate layer or as a functional layer in modified and/or filled and/or reinforced form.

14. Method according to Claim 1 or 8 or 9, wherein the thermoplastic hard plastics component is applied in modified and/or filled and/or reinforced form, and/or wherein the thermoset plastics component is applied in modified and/or filled and/or reinforced form.

15. Method according to Claim 1 or 8 or 9, wherein the coating film is applied from a solution or dispersion or as a powder or as a melt or as a liquid 100% system.

## Revendications

1. Procédé pour la fabrication de composites matériau-matériau synthétique, dans lequel une couche en une laque est appliquée sur au moins un composant de matériau, filmée et (partiellement) réticulée,
- la laque (partiellement) réticulée présentant des groupes isocyanate et/ou des groupes époxy libres (ré)actifs et/ou des groupes isocyanate pouvant être débloqués par redissociation thermique et/ou des groupes uretdione et/ou des groupes allophanate et/ou des groupes biuret activables (par voie thermique et/ou catalytique) et au moins un composant de matériau synthétique élastique étant ensuite appliqué au moyen d'un procédé d'application thermique dans un état liquide fondu, au moins partiellement, sur la couche de laque (partiellement) réticulée, le composant de matériau synthétique présentant des groupes fonctionnels qui sont en mesure, dans l'état liquide fondu, de former une liaison covalente avec les groupes (ré)actifs et/ou activables (par voie thermique et/ou catalytique) de la laque (partiellement) réticulée, sous forme de groupes uréthane et/ou de groupes allophanate et/ou de groupes urée et/ou de groupes biuret et/ou de groupes ester et/ou de groupes éther et/ou de groupes amide et/ou de groupes amine, ou
- la laque (partiellement) réticulée présentant des groupes fonctionnels sous forme de groupes époxy et/ou de groupes hydroxy et/ou de groupes acide carboxylique, et au moins un composant de matériau synthétique élastique étant ensuite appliqué au moyen d'un procédé d'application thermique dans un état liquide fondu, au moins partiellement, sur la couche de laque, le composant de matériau synthétique présentant des groupes isocyanate et/ou des groupes uretdione et/ou des groupes allophanate et/ou des groupes biuret et/ou des groupes époxy libres ou pouvant être débloqués thermiquement, qui sont en mesure, dans l'état liquide fondu, de former une liaison covalente avec les groupes fonctionnels de la laque (partiellement) réticulée, et
- la laque n'étant pas fondue après l'application du composant de matériau synthétique élastique et pendant toute la transformation ultérieure en composites matériau-matériau synthétique et le composite n'étant pas posttraité thermiquement.

2. Composites matériau-matériau synthétique, préparés selon un procédé selon la revendication 1, constitués par au moins un composant de matériau et au moins un composant de matériau synthétique élastique, une laque (partiellement) réticulée étant disposée au moins partiellement entre eux,
- les groupes isocyanate et/ou les groupes époxy libres (ré)actifs et/ou les groupes isocyanate débloqués par redissociation thermique et/ou les groupes uretdione et/ou les groupes allophanate et/ou les groupes biuret activables (par voie thermique et/ou catalytique) de la laque (partiellement) réticulée ayant réagi avec les groupes fonctionnels du composant de matériau synthétique élastique et une liaison covalente étant formée entre la laque (partiellement) réticulée et le composant de matériau synthétique élastique via des groupes uréthane et/ou des groupes allophanate et/ou des groupes urée et/ou des groupes biuret et/ou des groupes ester et/ou des groupes éther et/ou des groupes amide et/ou des groupes amine, ou
- les groupes hydroxy et/ou les groupes acide carboxylique et/ou les groupes époxy fonctionnels réactifs de la laque (partiellement) réticulée ayant réagi avec les groupes isocyanate libres et/ou les groupes isocyanate débloqués par redissociation thermique et/ou les groupes uretdione et/ou les groupes allophanate et/ou les groupes biuret et/ou les groupes époxy activés (par voie thermique et/ou catalytique) du composant de matériau synthétique élastique et une liaison covalente étant formée entre la laque (partiellement) réticulée et le composant de matériau synthétique élastique via des groupes uréthane et/ou des groupes allophanate et/ou des groupes ester et/ou des groupes éther et/ou des groupes amide,
les liaisons covalentes étant formées par des réactions d'addition des groupes isocyanate libres et/ou des groupes isocyanate débloqués par redissociation thermique et/ou par activation thermique et/ou catalytique des groupes uretdione et/ou des groupes allophanate et/ou des groupes biuret et/ou des groupes époxy et leur réaction avec des groupes fonctionnels et à l'exclusion de réactions radicalaires, et
- la laque n'ayant pas été refondue après l'application pendant tout le traitement ultérieur en composites matériau-matériau synthétique et le composant de matériau synthétique élastique étant appliqué à l'état fondu au moins partiellement sur la couche de laque par un procédé d'application thermique, sans posttraitement thermique après la formation des composites.

3. Composites matériau-matériau synthétique constitués par au moins un composant de matériau, au moins un composant de matériau synthétique élastique et au moins un composant de matériau synthétique thermoplastique, dur, le composant de matériau étant revêtu par au moins une laque (partiellement) réticulée,
- les groupes isocyanate et/ou les groupes époxy libres (ré)actifs et/ou les groupes isocyanate débloqués par redissociation thermique et/ou les groupes uretdione et/ou les groupes allophanate et/ou les groupes biuret activables (par voie thermique et/ou catalytique) de la laque (partiellement) réticulée ayant réagi avec les groupes fonctionnels du composant de matériau synthétique élastique et une liaison covalente étant formée entre la laque (partiellement) réticulée et le composant de matériau synthétique élastique via des groupes uréthane et/ou des groupes allophanate et/ou des groupes urée et/ou des groupes biuret et/ou des groupes ester et/ou des groupes éther et/ou des groupes amide et/ou des groupes amine, ou
- les groupes hydroxy et/ou les groupes acide carboxylique et/ou les groupes époxy fonctionnels réactifs de la laque (partiellement) réticulée ayant réagi avec les groupes isocyanate libres et/ou les groupes isocyanate débloqués par redissociation thermique et/ou les groupes uretdione et/ou les groupes allophanate et/ou les groupes biuret et/ou les groupes époxy activés (par voie thermique et/ou catalytique) du composant de matériau synthétique élastique et une liaison covalente étant formée entre la laque (partiellement) réticulée et le composant de matériau synthétique élastique via des groupes uréthane et/ou des groupes allophanate et/ou des groupes ester et/ou des groupes éther et/ou des groupes amide, et
- le composant de matériau synthétique élastique formant la liaison entre la couche de laque et le composant de matériau synthétique thermoplastique, dur, et
- les liaisons covalentes étant formées par des réactions d'addition des groupes isocyanate libres et/ou des groupes isocyanate débloqués par redissociation thermique et/ou par activation thermique et/ou catalytique des groupes uretdione et/ou des groupes allophanate et/ou des groupes biuret et/ou des groupes époxy et leur réaction avec des groupes fonctionnels et à l'exclusion de réactions radicalaires, et
- la laque n'ayant pas été refondue après l'application pendant tout le traitement ultérieur en composites matériau-matériau synthétique et le composant de matériau synthétique élastique étant appliqué au moins partiellement sur la couche de laque par un procédé d'application thermique et le composant de matériau synthétique thermoplastique, dur, étant appliqué au moins partiellement sur le composant de matériau synthétique élastique par un procédé d'application thermique ou le composant de matériau synthétique élastique et le composant de matériau synthétique thermoplastique, dur, étant appliqués dans un procédé sandwich (de moulage par pulvérisation) au moins partiellement sur la couche de laque, le composant élastique formant le composant de la peau dans le procédé sandwich, sans posttraitement thermique après la formation des composites.

4. Composites matériau-matériau synthétique constitués par au moins un composant de matériau, au moins un composant de matériau synthétique élastique et au moins un composant de matériau synthétique thermodurcissable, le composant de matériau étant revêtu par au moins une laque (partiellement) réticulée,
- les groupes isocyanate et/ou les groupes époxy libres (ré)actifs et/ou les groupes isocyanate débloqués par redissociation thermique et/ou les groupes uretdione et/ou les groupes allophanate et/ou les groupes biuret activables (par voie thermique et/ou catalytique) de la laque (partiellement) réticulée ayant réagi avec les groupes fonctionnels du composant de matériau synthétique élastique et une liaison covalente étant formée entre la laque (partiellement) réticulée et le composant de matériau synthétique élastique via des groupes uréthane et/ou des groupes allophanate et/ou des groupes urée et/ou des groupes biuret et/ou des groupes ester et/ou des groupes éther et/ou des groupes amide et/ou des groupes amine, ou
- les groupes hydroxy et/ou les groupes acide carboxylique et/ou les groupes époxy fonctionnels réactifs de la laque (partiellement) réticulée ayant réagi avec les groupes isocyanate libres et/ou les groupes isocyanate débloqués par redissociation thermique et/ou les groupes uretdione et/ou les groupes allophanate et/ou les groupes biuret et/ou les groupes époxy activés (par voie thermique et/ou catalytique) du composant de matériau synthétique élastique et une liaison covalente étant formée entre la laque (partiellement) réticulée et le composant de matériau synthétique élastique via des groupes uréthane et/ou des groupes allophanate et/ou des groupes ester et/ou des groupes éther et/ou des groupes amide, et
- le composant de matériau synthétique élastique formant la liaison entre la couche de laque et le composant de matériau synthétique thermodurcissable et
- les liaisons covalentes étant formées par des réactions d'addition des groupes isocyanate libres et/ou des groupes isocyanate débloqués par redissociation thermique et/ou par activation thermique et/ou catalytique des groupes uretdione et/ou des groupes allophanate et/ou des groupes biuret et/ou des groupes époxy et leur réaction avec des groupes fonctionnels et à l'exclusion de réactions radicalaires, et
- la laque n'ayant pas été refondue après l'application pendant tout le traitement ultérieur en composites matériau-matériau synthétique et le composant de matériau synthétique élastique étant appliqué au moins partiellement sur la couche de laque par un procédé d'application thermique et le composant de matériau synthétique thermodurcissable étant appliqué au moins partiellement sur le composant de matériau synthétique élastique par un procédé d'application thermique de la transformation des matériaux thermodurcissables, sans posttraitement thermique après la formation des composites.

5. Composites de matériau-matériau synthétique selon la revendication 2 ou 3 ou 4, dans lesquels le composant de matériau est constitué par du métal et ses modifications, du bois et ses modifications, du matériau synthétique et ses modifications, de la céramique et ses modifications ou leurs combinaisons de matériaux.

6. Composites de matériau-matériau synthétique selon la revendication 2 ou 3 ou 4, dans lesquels le composant de matériau synthétique élastique est constitué par des élastomères pouvant être transformés de manière thermoplastique/élastomères thermoplastiques (TPE), en particulier du polyuréthane, qui présente des groupes fonctionnels pour la formation de liaisons covalentes avec des groupes (ré)actifs et/ou activables (par voie thermique et/ou catalytique) de la couche de laque ou qui présente des groupes (ré)actifs et/ou activables (par voie thermique et/ou catalytique) pour la formation de liaisons covalentes avec des groupes fonctionnels de la couche de laque.

7. Composites de matériau-matériau synthétique selon la revendication 2 ou 3 ou 4, dans lesquels le composant de matériau synthétique élastique est appliqué par extrusion, moulage par transfert ou moussage (procédé dolphin), avantageusement par moulage par injection de plusieurs composants ou par un procédé sandwich (de moulage par injection).

8. Procédé pour la fabrication de composites matériau-matériau synthétique, dans lequel une couche en une laque est appliquée sur au moins un composant de matériau, filmée et (partiellement) réticulée,
- la laque (partiellement) réticulée présentant des groupes isocyanate et/ou des groupes époxy libres (ré)actifs et/ou des groupes isocyanate pouvant être débloqués par redissociation thermique et/ou des groupes uretdione et/ou des groupes allophanate et/ou des groupes biuret activables (par voie thermique et/ou catalytique) et au moins un composant de matériau synthétique élastique étant ensuite appliqué au moyen d'un procédé d'application thermique dans un état liquide fondu, au moins partiellement, sur la couche de laque (partiellement) réticulée, le composant de matériau synthétique présentant des groupes fonctionnels qui sont en mesure, dans l'état liquide fondu, de former une liaison covalente avec les groupes (ré)actifs et/ou activables (par voie thermique et/ou catalytique) de la laque (partiellement) réticulée, sous forme de groupes uréthane et/ou de groupes allophanate et/ou de groupes urée et/ou de groupes biuret et/ou de groupes ester et/ou de groupes éther et/ou de groupes amide et/ou de groupes amine, ou
- la laque (partiellement) réticulée présentant des groupes fonctionnels sous forme de groupes époxy et/ou de groupes hydroxy et/ou de groupes acide carboxylique, et au moins un composant de matériau synthétique élastique étant ensuite appliqué au moyen d'un procédé d'application thermique dans un état liquide fondu, au moins partiellement, sur la couche de laque, le composant de matériau synthétique présentant des groupes isocyanate libres et/ou pouvant être débloqués thermiquement et/ou des groupes uretdione et/ou des groupes allophanate et/ou des groupes biuret et/ou des groupes époxy, qui sont en mesure, dans l'état liquide fondu, de former une liaison covalente avec les groupes fonctionnels de la laque (partiellement) réticulée, et
- au moins un composant de matériau synthétique thermoplastique, dur, étant appliqué au moyen d'un procédé d'application thermique au moins partiellement sur le composant de matériau synthétique élastomère dans un procédé à plusieurs composants,
- la laque n'étant pas fondue après l'application du composant de matériau synthétique élastique et pendant toute la transformation ultérieure en composites matériau-matériau synthétique et le composite n'étant pas posttraité thermiquement.

9. Procédé pour la fabrication de composites matériau-matériau synthétique, dans lequel une couche en une laque est appliquée sur au moins un composant de matériau, filmée et (partiellement) réticulée,
- la laque (partiellement) réticulée présentant des groupes isocyanate et/ou des groupes époxy libres (ré)actifs et/ou des groupes isocyanate pouvant être débloqués par redissociation thermique et/ou des groupes uretdione et/ou des groupes allophanate et/ou des groupes biuret activables (par voie thermique et/ou catalytique) et au moins un composant de matériau synthétique élastique étant ensuite appliqué au moyen d'un procédé d'application thermique dans un état liquide fondu, au moins partiellement, sur la couche de laque (partiellement) réticulée, le composant de matériau synthétique présentant des groupes fonctionnels qui sont en mesure, dans l'état liquide fondu, de former une liaison covalente avec les groupes (ré)actifs et/ou activables (par voie thermique et/ou catalytique) de la laque (partiellement) réticulée, sous forme de groupes uréthane et/ou de groupes allophanate et/ou de groupes urée et/ou de groupes biuret et/ou de groupes ester et/ou de groupes éther et/ou de groupes amide et/ou de groupes amine, ou
- la laque (partiellement) réticulée présentant des groupes fonctionnels sous forme de groupes époxy et/ou de groupes hydroxy et/ou de groupes acide carboxylique, et au moins un composant de matériau synthétique élastique étant ensuite appliqué au moyen d'un procédé d'application thermique dans un état liquide fondu, au moins partiellement, sur la couche de laque, le composant de matériau synthétique présentant des groupes isocyanate libres ou pouvant être débloqués thermiquement et/ou des groupes uretdione et/ou des groupes allophanate et/ou des groupes biuret des groupes époxy, qui sont en mesure, dans l'état liquide fondu, de former une liaison covalente avec les groupes fonctionnels de la laque (partiellement) réticulée, et
- au moins un composant de matériau synthétique thermodurcissable étant appliqué au moyen d'un procédé d'application thermique au moins partiellement sur le composant de matériau synthétique élastomère,
- la laque n'étant pas fondue après l'application pendant toute la transformation ultérieure en composite matériau-matériau synthétique et le composite n'étant pas posttraité thermiquement.

10. Procédé selon les revendications 1 ou 8 ou 9, dans lequel on utilise, comme composant de matériau, du métal et ses modifications, du bois et ses modifications, du matériau synthétique et ses modifications, de la céramique et ses modifications ou leurs combinaisons de matériaux.

11. Procédé selon les revendications 1 ou 8 ou 9, dans lequel on utilise, comme composant de matériau synthétique élastique, des élastomères pouvant être transformés par voie thermoplastique/élastomères thermoplastiques (TPE), en particulier du polyuréthane, qui présente des groupes (ré)actifs et/ou activables (par voie thermique et/ou catalytique) pour la formation de liaisons covalentes avec des groupes fonctionnels de la couche de laque ou qui présente des groupes fonctionnels pour la formation de liaisons covalentes avec des groupes (ré)actifs et/ou activables (par voie thermique et/ou catalytique) de la couche de laque.

12. Procédé selon les revendications 1 ou 8 ou 9, dans lequel le composant de matériau synthétique élastique est appliqué par extrusion, moulage par injection (de plusieurs composants), moulage par transfert ou moussage (procédé dolphin).

13. Procédé selon les revendications 1 ou 8 ou 9, dans lequel le composant de matériau synthétique élastique est appliqué comme couche intermédiaire présentant une épaisseur de 0,1 à 10 mm et de préférence de 0,5 à 2 mm ou comme couche fonctionnelle et/ou dans lequel le composant de matériau synthétique élastique, en tant que couche intermédiaire ou en tant que couche fonctionnelle, est appliqué sous forme modifiée et/ou chargée et/ou renforcée.

14. Procédé selon les revendications 1 ou 8 ou 9, dans lequel le composant de matériau synthétique thermoplastique, dur, est appliqué sous forme modifiée et/ou chargée et/ou renforcée et/ou dans lequel le composant de matériau synthétique thermodurcissable est appliqué sous forme modifiée et/ou chargée et/ou renforcée.

15. Procédé selon la revendication 1 ou 8 ou 9, dans lequel la couche de laque est appliquée à partir d'une solution ou d'une dispersion ou sous forme de poudre ou sous forme de masse fondue ou sous forme de système liquide à 100%.
